(19) Europäisches Patentamt
European Patent Office
Office européen des brevets

(11) **EP 4 734 396 A1**

(12) **EUROPEAN PATENT APPLICATION**
published in accordance with Art. 153(4) EPC

(43) Date of publication:
**29.04.2026 Bulletin 2026/18**

(21) Application number: **24829928.1**

(22) Date of filing: **05.03.2024**

(51) International Patent Classification (IPC):
***H04B 7/145*** (2006.01)

(52) Cooperative Patent Classification (CPC):
**H04B 7/06; H04B 7/145; H04W 16/18**

(86) International application number:
**PCT/CN2024/080024**

(87) International publication number:
**WO 2025/001275 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2023 CN 202310777620**

(71) Applicant: **ZTE CORPORATION**
**Shenzhen, Guangdong 518057 (CN)**

(72) Inventor: **ZHANG, Yongliang**
**Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **RECONFIGURABLE INTELLIGENCE SURFACE ACCESSORY DEVICE AND TERMINAL COMMUNICATION METHOD**

(57)     Embodiments of the present application provide a reconfigurable intelligence surface accessory device and a terminal communication method. The accessory device is fixedly connected to a terminal or is detachably connected to the terminal, the accessory device comprises a plurality of separate reconfigurable intelligence surfaces, and the plurality of separate reconfigurable intelligence surfaces are connected; the plurality of separate reconfigurable intelligence surfaces comprise a folded state and an unfolded state; in the folded state, the accessory device is used for assisting the terminal in performing uplink communication; in the unfolded state, the accessory device is used for assisting at least one of the terminal and a peripheral terminal of the terminal in performing uplink communication and/or downlink communication.

Reconfigurable intelligence surface accessory device 10

A plurality of separate reconfigurable intelligence surfaces101
(Including a folded state and an unfolded state)

Terminal 11

FIG. 1

**Description**

CROSS-REFERENCE TO RELATED APPLICATIONS

The present application claims the priority of the Chinese patent application No. 202310777620.5 filed to the CNIPA on June 27, 2023, and entitled "RECONFIGURABLE INTELLIGENCE SURFACE ACCESSORY DEVICE AND TERMINAL COMMUNICATION METHOD", the entire contents of which are incorporated herein by reference.

TECHNICAL FIELD

The present application relates to the technical field of communications, in particular to a reconfigurable intelligence surface accessory device and a terminal communication method.

BACKGROUND

A reconfigurable intelligence surface (RIS), also known as an intelligent metasurface, is an artificial electromagnetic surface structure with a programmable electromagnetic characteristic, and is formed by arranging a large quantity of well-designed electromagnetic units. The electromagnetic property of the electromagnetic units may be dynamically adjusted through a control circuit to achieve intelligent reconfiguration of a wireless signal propagation characteristic in a three-dimensional space. The reconfigurable intelligence surface may usually assist a base station in performing downlink communication, so as to enhance the signal quality of a downlink signal received by a terminal. However, in practical application scenarios, the terminal usually has a need for uplink enhancement or downlink enhancement when performing uplink communication or downlink communication. Considering the characteristics of the reconfigurable intelligence surface, if the reconfigurable intelligence surface can be combined with the terminal, it will effectively assist the terminal in performing communication.

SUMMARY

In a first aspect, a reconfigurable intelligence surface accessory device is provided. The accessory device is fixedly connected to a terminal or is detachably connected to the terminal, the accessory device includes a plurality of separate reconfigurable intelligence surfaces, and the plurality of separate reconfigurable intelligence surfaces are connected; wherein the plurality of separate reconfigurable intelligence surfaces include a folded state and an unfolded state; in the folded state, the accessory device is configured to assist the terminal in performing uplink communication; and in the unfolded state, the accessory device is configured to assist at least one of the terminal or a peripheral terminal of the terminal in performing uplink communication and/or downlink communication.

In a second aspect, a terminal communication method is provided, applied to a terminal. The terminal is fixedly connected or detachably connected to the reconfigurable intelligence surface accessory device described in the first aspect, and the method includes: acquiring a communication quality parameter of the terminal; and determining an operating state of a plurality of separate reconfigurable intelligence surfaces according to the communication quality parameter of the terminal, wherein the operating state is a folded state or an unfolded state.

In a third aspect, an electronic device is provided, including: a processor; and a memory, configured to store processor-executable instructions; wherein the processor is configured to execute the instructions, so as to implement the method described in the second aspect.

In a fourth aspect, a computer-readable storage medium is provided, and instructions in the storage medium, when executed by a processor of an electronic device, cause the electronic device to be able to perform the method described in the second aspect.

In a fifth aspect, a terminal is provided, and the terminal is fixedly connected or detachably connected to the reconfigurable intelligence surface accessory device described in the first aspect.

BRIEF DESCRIPTION OF DRAWING(S)

To illustrate the technical solutions in embodiments of the present application or in the prior art more clearly, the accompanying drawings required to be used in describing the embodiments or the prior art will be briefly introduced below. Apparently, the accompanying drawings in the following description are only some embodiments recorded in the present application, and those ordinarily skilled in the art may still derive other accompanying drawings according to these accompanying drawings without creative efforts.

FIG. 1 is a schematic structural diagram of a reconfigurable intelligence surface accessory device according to an embodiment of the present application.

FIG. 2 is a schematic diagram of a plurality of separate reconfigurable intelligence surfaces in a folded state and an unfolded state according to an embodiment of the present application.

FIG. 3 is a schematic structural diagram of a plurality of separate reconfigurable intelligence surfaces and a shielding outer cover according to an embodiment of the present application.

FIG. 4 is a schematic diagram of a support pan-tilt driving a plurality of separate reconfigurable intelligence surfaces to be folded and unfolded according to an embodiment of the present application.

FIG. 5 is a schematic diagram of an outer cover, rotating shafts and a support pan-tilt serving as supporting points of a plurality of separate reconfigurable intelligence surfaces according to an embodiment of the present application.

FIG. 6 is a schematic diagram of a support pan-tilt fixed on a surface of a terminal through a U-shaped bracket according to an embodiment of the present application.

FIG. 7 is a schematic diagram of a torsional spring hinge and a third motor according to an embodiment of the present application.

FIG. 8 is a schematic diagram of a plurality of separate reconfigurable intelligence surfaces fully surrounding a terminal according to an embodiment of the present application.

FIG. 9 is a schematic diagram of a control circuit board arranged in a support pan-tilt according to an embodiment of the present application.

FIG. 10 is a schematic diagram of performing communication based on an STAR-RIS according to an embodiment of the present application.

FIG. 11 is a schematic flowchart of a terminal communication method according to an embodiment of the present application.

FIG. 12 is a schematic diagram of a plurality of separate reconfigurable intelligence surfaces configured to perform uplink enhancement in a folded state according to an embodiment of the present application.

FIG. 13 is a schematic diagram of a plurality of separate reconfigurable intelligence surfaces configured to perform uplink enhancement and downlink enhancement simultaneously in a single-layer tiled state according to an embodiment of the present application.

FIG. 14 is a schematic diagram of a plurality of separate reconfigurable intelligence surfaces assisting a terminal in performing communication in a folded state and an unfolded state according to an embodiment of the present application.

FIG. 15 is a schematic flowchart of a terminal communication method according to an embodiment of the present application.

FIG. 16 is a schematic structural diagram of an electronic device according to an embodiment of the present application.

FIG. 17 is a schematic structural diagram of a terminal communication apparatus according to an embodiment of the present application.

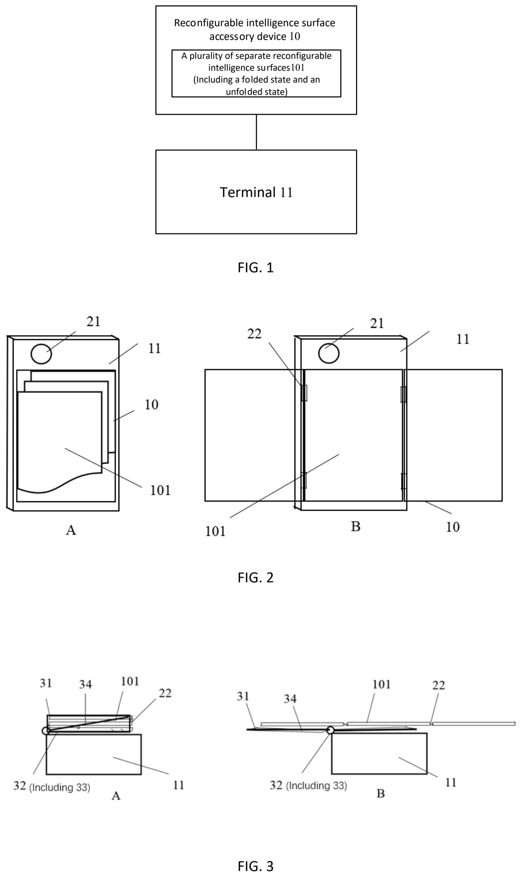

A correspondence between reference numerals in FIG. 1 to FIG. 9 and component names is as follows:

10 Reconfigurable intelligence surface accessory device, 11 Terminal, 101 Separate reconfigurable intelligence surface, 21 Camera or other auxiliary peripherals, 22 Torsional spring hinge, 221 Torsional spring, 222 Hinge, 31 Shielding out cover, 32 First rotating shaft, 33 First motor, 34 Support rod, 41 Support pan-tilt, 42 Second rotating shaft, 60 U-shaped bracket, 61 Telescopic cylinder, 62 Adjusting nut, 63 Clamping tongue, 71 Third motor, 81 Stretchable separate reconfigurable intelligence surface, 90 Control circuit board, 91 Controller, 92 Communication module, 93 Battery, 94 Power management module, and 95 Memory.

DETAILED DESCRIPTION

In order to make personnel in this technical field understand the technical solutions in the embodiments of the present application better, the technical solutions in the embodiments of the present application will be described below clearly and completely with reference to the accompanying drawings in one or more embodiments of the present application. Apparently, the described embodiments are only part of the embodiments of the present application, but not all the embodiments. All other embodiments obtained by those ordinarily skilled in the art based on the embodiments in the present application without making creative efforts should fall within the scope of protection of this document.

Terms "first," "second" and the like in the present application and the claims are used for distinguishing similar objects, but are not used for describing a specific sequence or precedence order. It should be understood that data used in this way may be interchanged where appropriate, so that the embodiments of the present application can be implemented according to sequences other than those illustrated or described here. In addition, "and/or" in the present application and the claims represents at least one of the connected objects. A character "/" generally represents that the association objects in front of and behind "/" are in an "or" relationship.

The technical solutions provided by the embodiments of the present application are described in detail below in combination with the accompanying drawings.

FIG. 1 is a schematic structural diagram of a reconfigurable intelligence surface accessory device 10 according to an embodiment of the present application.

The reconfigurable intelligence surface accessory device 10 shown in FIG. 1 is connected to a terminal 11, and a connection method may be a fixed connection or a detachable connection. The reconfigurable intelligence surface accessory device 10 includes a plurality of separate reconfigurable intelligence surfaces 101, and the plurality of separate reconfigurable intelligence surfaces 101 are connected. The plurality of separate reconfigurable intelligence surfaces 101 include a folded state and an unfolded state (not shown in FIG. 1); and in the folded state, the reconfigurable intelligence surface accessory device 10 may assist the terminal 11 in performing uplink communication. In the unfolded state, the reconfigurable intelligence surface accessory device 10 may assist at least one of the terminal 11 or a peripheral terminal of the terminal 11 in performing uplink communication and/or downlink communication.

The reconfigurable intelligence surface accessory device (hereinafter referred to as an accessory device) is fixedly connected to the terminal, which may mean that the accessory device is connected to the terminal through a fixing member or other objects, and after connection, the accessory device cannot be detached from the terminal. For example, the accessory device may be welded to the terminal through a metal bracket or other fixing members, or may adhere to the terminal through strong glue or other objects. After the accessory device is welded or adhere to the terminal, the accessory device cannot be detached from the terminal. The accessory device is fixedly connected to the terminal, which may mean that the accessory device is fixedly connected to a shell of the terminal.

The accessory device is detachably connected to the terminal, which may mean that the accessory device is connected to the terminal through a movable member, and after connection, the accessory device can be detached from the terminal. For example, the accessory device may be fixed to the terminal through the movable member such as a U-shaped bracket, the U-shaped bracket can be detached from the terminal, and thus the accessory device can be detached from the terminal. The accessory device is detachably connected to the terminal, which may mean that the accessory device is detachably connected to the shell of the terminal.

The plurality of separate reconfigurable intelligence surfaces are connected, which may mean that the plurality of separate reconfigurable intelligence surfaces are connected in sequence through a connecting member. Optionally, the connecting member may be a torsional spring hinge, etc., which is not specifically limited here.

The above terminal may be a fixed terminal or a mobile terminal with a communication function. For example, the terminal may be customer premise equipment (CPE), a vehicle-mounted terminal, a mobile phone, a tablet computer, a smart home, etc.

The peripheral terminal of the terminal may be other terminals around the terminal, for example, a terminal such as an Internet of Vehicles with a device-to-device (D2D) communication function, a terminal with a weak indoor coverage signal, a low-power Internet of Things terminal, etc. The quantity of the peripheral terminals may be one or more.

The accessory device includes the plurality of separate reconfigurable intelligence surfaces. The reason for arranging the plurality of separate reconfigurable intelligence surfaces is that, on the one hand, the quantity of electromagnetic units that can be configured in a single separate reconfigurable intelligence surface is limited, while the quantity of electromagnetic units in the plurality of separate reconfigurable intelligence surfaces is relatively large, which can meet the need for the quantity of electromagnetic units. On the other hand, the plurality of separate reconfigurable intelligence surfaces have the folded state and the unfolded state. By folding and unfolding the plurality of separate reconfigurable intelligence surfaces, the communication needs of the terminal in different scenarios can be met, while the single separate reconfigurable intelligence surface cannot be unfolded or folded, which cannot meet the communication needs of the terminal in different scenarios.

The specific quantity of the plurality of separate reconfigurable intelligence surfaces may be determined according to actual needs, which is not specifically limited here. Optionally, for the mobile terminal, in order to prevent excessive separate reconfigurable intelligence surfaces from affecting the use convenience of the mobile terminal, the quantity of the plurality of separate reconfigurable intelligence surfaces may be set to be smaller, for example, 3-5. For the fixed terminal, as the fixed terminal is not sensitive to the use convenience, the quantity of the plurality of separate reconfigurable intelligence surfaces may be set larger, such as 5 or more.

The folded state of the plurality of separate reconfigurable intelligence surfaces may be a state where the plurality of separate reconfigurable intelligence surfaces are stacked and folded in multiple layers. For example, if the quantity of the separate reconfigurable intelligence surfaces is 3, the folded state of the three separate reconfigurable intelligence surfaces may be a state where three layers are stacked and folded, and each layer includes one separate reconfigurable intelligence surface. For another example, if the quantity of the separate reconfigurable intelligence surfaces is 6, the folded state of the six separate reconfigurable intelligence surfaces may be a state where three layers are stacked and folded, and each layer includes two separate reconfigurable intelligence surfaces. Certainly, in other possible implementations, the plurality of separate reconfigurable intelligence surfaces may also be in other forms of multi-layer stacking and folding. Here, examples of other possible implementations are not illustrated here one by one. Optionally, the folded state of the plurality of separate reconfigurable intelligence surfaces may be a default state (i.e., default state) of the plurality of separate reconfigurable intelligence surfaces.

It should be noted that when the plurality of separate reconfigurable intelligence surfaces are in a multi-layer stacked and folded state, a certain gap is needed between two adjacent layers of separate reconfigurable intelligence surfaces, and the gap is usually related to a carrier wavelength. Generally, the smaller the carrier wavelength, the smaller the gap can be.

The unfolded state of the plurality of separate reconfigurable intelligence surfaces may be a state where the plurality of separate reconfigurable intelligence surfaces are unfolded in a single layer. Optionally, the unfolded state may include at least one unfolding method, and the at least one unfolding method may include at least one of single-layer tiling, single-layer non-tiling, semi-surrounding the terminal, or fully surrounding the terminal. That is, the unfolded state may include at least one state of a single-layer tiled state, a single-layer non-tiled state, a state of semi-surrounding the terminal, or a state of fully surrounding the terminal. The single-layer tiled state may be a state where the plurality of separate reconfigurable intelligence surfaces are tiled in a single-layer wing-spreading manner. The single-layer non-tiled state may be a state where an included angle between two adjacent separate reconfigurable intelligence surfaces is not 180 degrees when the plurality of separate reconfigurable intelligence surfaces are in a single-layer wing-spreading state. The state of semi-surrounding the terminal and the state of fully surrounding the terminal may be special cases where the plurality of separate reconfigurable intelligence surfaces are in the single-layer non-tiled state. In some cases, the state of semi-surrounding the terminal may be a state of semi-surrounding the terminal presented when an included angle between the separate reconfigurable intelligence surfaces meets a certain condition in a case where the plurality of separate reconfigurable intelligence surfaces are in the single-layer non-tiled state. The state of fully surrounding the terminal may be a state of fully surrounding the terminal presented when an included angle between the separate reconfigurable intelligence surfaces meets a certain condition in a case where the plurality of separate reconfigurable intelligence surfaces are in the single-layer non-tiled state. In a case where the plurality of separate reconfigurable intelligence surfaces semi-surround or fully surrounds the terminal, the reconfigurable intelligence surfaces can cover multiple directions or all directions around the terminal, thereby assisting in enhancing the communication of the terminal in multiple directions.

FIG. 2 is a schematic diagram of a plurality of separate reconfigurable intelligence surfaces in a folded state and an unfolded state according to an embodiment of the present application. Illustration is made in FIG. 2 by taking three separate reconfigurable intelligence surfaces as an example. In FIG. 2A and FIG. 2B, a reconfigurable intelligence surface accessory device 10 is fixedly connected to or detachably connected to a terminal 11, and the three separate reconfigurable intelligence surfaces are connected by a torsional spring hinge 22 (as shown in FIG. 2B, not shown in FIG. 2A). FIG. 2A is the folded state of the three separate reconfigurable intelligence surfaces 101, and the three separate reconfigurable intelligence surfaces 101 present a three-layer stacked and folded state. FIG. 2B is the unfolded state of the three separate reconfigurable intelligence surfaces 101, and the three separate reconfigurable intelligence surfaces 101 are unfolded in a single-layer wing-spreading tiled manner.

In the embodiment of the present application, the plurality of separate reconfigurable intelligence surfaces may be used for uplink enhancement in the folded state, and may be used for uplink enhancement in the unfolded state, or for downlink enhancement, or for uplink enhancement and downlink enhancement simultaneously. The plurality of separate reconfigurable intelligence surfaces have multi-layer cascading and penetration losses in a multi-layer stacked and folded state, and are sensitive to interference. Therefore, it is necessary to shield external interference of the plurality of separate reconfigurable intelligence surfaces in a multi-layer stacked and folded state. Optionally, a shielding outer cover containing a wave-absorbing material may be arranged in the reconfigurable intelligence surface accessory device, and the external interference may be shielded by the shielding outer cover. In some cases, when the plurality of separate reconfigurable intelligence surfaces are in the multi-layer stacked and folded state, the plurality of separate reconfigurable intelligence surfaces may be folded inside the shielding outer cover. That is, the shielding outer cover covers the plurality of separate reconfigurable intelligence surfaces which are stacked and folded in multiple layers, thereby achieving shielding of the external interference.

In a case where the reconfigurable intelligence surface accessory device includes the shielding outer cover, considering that the plurality of separate reconfigurable intelligence surfaces further include the unfolded state, and when switched from the folded state to the unfolded state, the plurality of separate reconfigurable intelligence surfaces cannot be unfolded unless breaking through the shielding outer cover, and thus the shielding outer cover needs to be opened and closed. In this way, when the plurality of separate reconfigurable intelligence surfaces are in the folded state, the shielding outer cover may be closed to shield the external interference. When the plurality of separate reconfigurable intelligence surfaces need to be unfolded, the shielding outer cover may be opened to unfold the plurality of separate reconfigurable intelligence surfaces.

In order to achieve opening and closing of the shielding outer cover, optionally, in an implementation, the shielding outer cover may be equipped with a support rod and a first rotating shaft. The first rotating shaft may be driven by a first motor, and when the first motor drives the first rotating shaft to rotate, the first rotating shaft may control the support rod to drive the shielding outer cover to be opened or closed. In this way, when the plurality of separate reconfigurable intelligence surfaces are in the folded state, the first motor may drive the first rotating shaft to rotate, so that the first rotating shaft controls the support rod to drive the shielding outer cover to be closed, and the plurality of separate reconfigurable intelligence surfaces are covered inside the shielding outer cover to shield the external interference. When the plurality of separate reconfigurable intelligence surfaces are unfolded, the first motor may drive the first rotating shaft to rotate, so that the first rotating shaft controls the support rod to drive the shielding outer cover to be opened, and the plurality of separate reconfigurable intelligence surfaces extend outward from an interior of the shielding outer cover to unfold the plurality of separate reconfigurable intelligence surfaces. The first motor may be powered and controlled by the reconfigurable intelligence surface accessory device, or by the terminal. When extending outward from the interior of the shielding outer cover, the plurality of separate reconfigurable intelligence surfaces may be unfolded in the middle of the shielding outer cover and then extend outward, or extend outward from two sides of the shielding outer cover, which is not specifically limited here.

For ease of understanding, reference may be made to FIG. 3. Illustration is made in FIG. 3 by taking a reconfigurable intelligence surface accessory device including three separate reconfigurable intelligence surfaces as an example. In FIG. 3A, the three separate reconfigurable intelligence surfaces 101 are connected by a torsional spring hinge 22 and folded inside a shielding outer cover 31 in a three-layer stacking manner. The shielding outer cover 31 is in a closed state, and in the closed state, the shielding outer cover 31 can shield the three separate reconfigurable intelligence surfaces 101 from external interference. The shielding outer cover 31 is equipped with a support rod 34 and a first rotating shaft 32. The first rotating shaft 32 contains a first motor 33, and the first motor 33 may drive the first rotating shaft 32 to rotate. When the three separate reconfigurable intelligence surfaces 101 needs to be unfolded, the first motor 33 may be powered. The first motor 33 may drive the first rotating shaft 32 to rotate. The first rotating shaft 32, when rotating, controls the support rod 34 to drive the shielding outer cover 31 to be opened towards two sides, and the three separate reconfigurable intelligence surfaces 101 extend outward from two sides of the shielding outer cover 31 to be in the unfolded state shown in FIG. 3B. In the unfolded state, the shielding outer cover 31 is in an open state. When the three separate reconfigurable intelligence surfaces 101 are switched from the unfolded state to the folded state, the first motor 33 may be powered. The first motor 33 drives the first rotating shaft 32 to rotate. The first rotating shaft 32, when rotating, controls the support rod 34 to drive the shielding outer cover 31 to be folded from two sides to the middle to the closed state shown in FIG. 3A.

Optionally, in a case where the reconfigurable intelligence surface accessory device includes the shielding outer cover, the reconfigurable intelligence surface accessory device may be connected to the terminal through the shielding outer cover, and the shielding outer cover may be fixedly connected to the terminal or detachably connected to the terminal. The shielding outer cover is fixedly connected to the terminal, which may mean that the bottom of the first rotating shaft of the shielding outer cover is welded to a surface of the terminal (such as the shell of the terminal), or the bottom of the first rotating shaft is fixed to the surface of the terminal through strong glue or other methods. The shielding outer cover is detachably connected to the terminal, which may mean that the bottom of the first rotating shaft is fixed to the surface of the terminal through a screw/nut pair or other detachable devices.

Optionally, the reconfigurable intelligence surface accessory device may further include a support pan-tilt. The reconfigurable intelligence surface accessory device is connected to the terminal, which may mean that the reconfigurable intelligence surface accessory device is connected to the terminal through the support pan-tilt, and the support pan-tilt may be fixedly connected to the terminal or detachably connected to the terminal. The support pan-tilt is fixedly connected to the terminal, which may mean that a bottom of the support pan-tilt is welded to the surface of the terminal (such as the shell of the terminal), or the support pan-tilt is fixed to the surface of the terminal through strong glue or other methods. The support pan-tilt is detachably connected to the terminal, which may mean that the bottom of the support pan-tilt is fixed to the surface of the terminal through a screw/nut pair or a U-shaped bracket or other detachable devices.

The support pan-tilt may provide support for the plurality of separate reconfigurable intelligence surfaces and may drive the plurality of separate reconfigurable intelligence surfaces to be unfolded or folded. In some cases, the support pan-tilt is equipped with a second rotating shaft, the second rotating shaft may be driven by a second motor, the second rotating shaft, when rotating, may drive the support pan-tilt to rotate, and the support pan-tilt, when rotating, may drive the plurality of separate reconfigurable intelligence surfaces to be unfolded or folded. The second motor may be powered and controlled by the reconfigurable intelligence surface accessory device, or by the terminal.

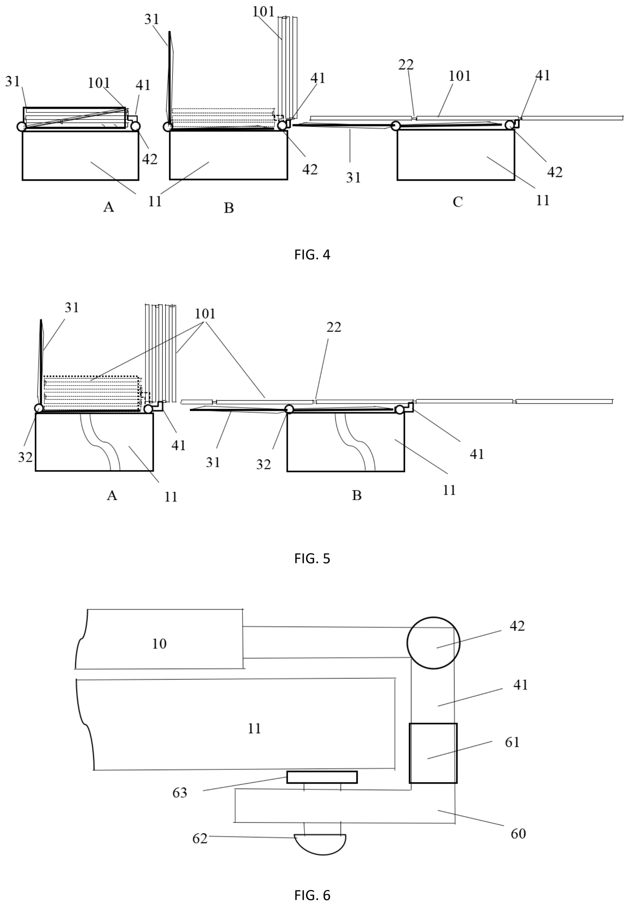

For ease of understanding, reference may be made to FIG. 4. Illustration is made in FIG. 4 by taking a reconfigurable intelligence surface accessory device including three separate reconfigurable intelligence surfaces as an example. It should be noted that a support pan-tilt 41 is added to the reconfigurable intelligence surface accessory device shown in FIG. 4 compared to FIG. 3, and other components are the same as FIG. 3. Components not labeled in FIG. 4 may refer to the illustration of the corresponding components in FIG. 3, which will not be repeated here.

In FIG. 4, the reconfigurable intelligence surface accessory device is connected to a terminal 11 through the support pan-tilt 41 (which may be a fixed connection or a detachable connection). The support pan-tilt 41 is located on a right side of the terminal and is connected to three separate reconfigurable intelligence surfaces 101, so as to drive the three separate reconfigurable intelligence surfaces to be unfolded or folded. The support pan-tilt 41 is equipped with a second rotating shaft 42, the second rotating shaft 42 may be driven by a second motor (not shown in FIG. 4), when the second motor drives the second rotating shaft 42 to rotate, the second rotating shaft 42 may drive the support pan-tilt 41 to rotate, and the support pan-tilt 41, when rotating, may drive the plurality of separate reconfigurable intelligence surfaces 101 to be unfolded or folded. A specific process is as follows.

As shown in FIG. 4A, in a folded state, three separate reconfigurable intelligence surfaces 101 are folded within a shielding outer cover 31 in a three-layer stacking manner. When the three separate reconfigurable intelligence surfaces are unfolded, the shielding outer cover 31 may be controlled to be opened first, and then the second motor may be powered. The second motor drives the second rotating shaft 42 to rotate. The second rotating shaft 42, when rotating, drives the support pan-tilt 41 to rotate. The support pan-tilt 41, when rotating, drives the plurality of separate reconfigurable intelligence surfaces 101 to rotate from a horizontal direction to a vertical direction, as shown in FIG. 4B. In a state shown in FIG. 4B, the shielding outer cover 31 can continue to be controlled to be opened, and at the same time, the three separate reconfigurable intelligence surface may be unfolded. An unfolded state is shown in FIG. 4C. In FIG. 4C, the shielding outer cover 41 is in an open state, and the three separate reconfigurable intelligence surfaces are in a single-layer wing-spreading tiled state. When the three separate reconfigurable intelligence surfaces are folded, the three separate reconfigurable intelligence surfaces may be stacked and folded vertically first, and then the shielding outer cover 31 is controlled to be closed, as shown in FIG. 4B. In the state shown in FIG. 4B, the second motor may be powered. The second motor drives the second rotating shaft 42 to rotate. The second rotating shaft 42, when rotating, drives the support pan-tilt 41 to rotate. The support pan-tilt 41, when rotating, drives the plurality of separate reconfigurable intelligence surfaces 101 to rotate from a vertical direction to a horizontal direction. Then the shielding outer cover 31 continues to be closed until the three separate reconfigurable intelligence surfaces are covered within the shielding outer cover 31, as shown in FIG. 4A. The specific implementation for controlling the opening and closing of the shielding outer cover 31 throughout the entire process may refer to the embodiment shown in FIG. 3, which will not be described in detail here.

It should be noted that in a case where the reconfigurable intelligence surface accessory device includes the shielding outer cover and is connected to the terminal through the support pan-tilt, the reconfigurable intelligence surface accessory device may be connected to the terminal through the shielding outer cover and/or the support pan-tilt. That is, the reconfigurable intelligence surface accessory device is fixedly connected to the terminal or detachably connected to the terminal through the shielding outer cover and/or the support pan-tilt. This can make the connection between the reconfigurable intelligence surface accessory device and the terminal more stable. The shielding outer cover may be connected to a left side or upper side of the terminal, and the support pan-tilt may be connected to a right side or lower side of the terminal.

In addition, in a case where the reconfigurable intelligence surface accessory device includes the shielding outer cover and is connected to the terminal through the support pan-tilt, the shielding outer cover and/or the support pan-tilt may further provide support for the plurality of separate reconfigurable intelligence surfaces. In the case of a small quantity of separate reconfigurable intelligence surfaces, the shielding outer cover or the support pan-tilt may provide support for the plurality of separate reconfigurable intelligence surfaces, as shown in FIG. 4. In the case of a large quantity of separate reconfigurable intelligence surfaces, the shielding outer cover and the support pan-tilt may jointly provide support for the plurality of separate reconfigurable intelligence surfaces, as shown in FIG. 5.

In FIG. 4, considering that the quantity of the three separate reconfigurable intelligence surfaces is small, the three separate reconfigurable intelligence surfaces can be supported only by the support pan-tilt 41. In some cases, in the folded state, the support pan-tilt 41 may serve as a supporting point on the right side of the three separate reconfigurable intelligence surfaces 101, to fix the three separate reconfigurable intelligence surfaces 101 inside the shielding outer cover 31, as shown in FIG. 4A. During the process of switching from the folded state to the unfolded state, the support pan-tilt 41 may support the three separate reconfigurable intelligence surfaces to rotate, as shown in FIG. 4B. In the unfolded state, the support pan-tilt 41 may serve as a support point for the small area unfolding of the three separate reconfigurable intelligence surfaces 101, as shown in FIG. 4C.

In FIG. 5, considering that the quantity of the five separate reconfigurable intelligence surfaces is large, the shielding outer cover 31 and the support pan-tilt 41 may jointly provide support for the five separate reconfigurable intelligence surfaces. In some cases, in the folded state, the first rotating shaft 32 of the shielding outer cover 31 and the support pan-tilt 41 may serve as supporting points on the left and right sides to fix the five stacked and folded separate reconfigurable intelligence surfaces 101 inside the shielding outer cover 31. During the process of switching from the folded state to the unfolded state, the support pan-tilt 41 may support and drive the three separate reconfigurable intelligence surfaces to rotate. In the unfolded state, the first rotating shaft 32 of the shielding outer cover 31 and the support pan-tilt 41 may jointly serve as support points for the large area unfolding of the five separate reconfigurable intelligence surfaces 101. Components not labeled in FIG. 5 may refer to the illustration of the corresponding components in FIG. 3 and FIG. 4, which will not be repeated here.

As mentioned above, the support pan-tilt may be connected to the surface of the terminal through a U-shaped bracket. In this case, optionally, the different thicknesses of different terminals are considered. Therefore, in order to adapt to the thickness of the terminal and fix the support pan-tilt on the terminal, an adjusting device may be arranged for the U-shaped bracket. The adjusting device may include an adjusting nut and a telescopic cylinder. The width of the U-shaped bracket may be adjusted through the adjusting nut and the telescopic cylinder to adapt to different thicknesses of the terminal.

FIG. 6 is a schematic diagram of a support pan-tilt fixed on a surface of a terminal through a U-shaped bracket according to an embodiment of the present application. In FIG. 6, the support pan-tilt 41 is fixed to the terminal 11 through the U-shaped bracket 60, and a reconfigurable intelligence surface accessory device 10 is fixed to the terminal 11 through the support pan-tilt 41. The U-shaped bracket 60 includes a telescopic cylinder 61, an adjusting nut 62, and a clamping tongue 63. When the support pan-tilt is fixed to the terminal 11 through the U-shaped bracket, the adjusting nut may be adjusted according to the thickness of the terminal 11. The telescopic cylinder cooperates with the U-shaped bracket to stretch and contract, so that the width of the U-shaped bracket matches the thickness of the terminal.

In the embodiment of the present application, a plurality of separate reconfigurable intelligence surfaces are connected, which may mean that the plurality of separate reconfigurable intelligence surfaces are connected in sequence through a torsional spring hinge. Optionally, the torsional spring hinge may further be configured to unfold or fold the plurality of separate reconfigurable intelligence surfaces. In some cases, in a case where the reconfigurable intelligence surface accessory device includes the support pan-tilt, the torsional spring hinge may be configured to assist the support pan-tilt in unfolding or folding the plurality of separate reconfigurable intelligence surfaces, as shown in FIG. 4 and FIG. 5. In FIG. 4, when the support pan-tilt 41 controls three separate reconfigurable intelligence surfaces to a state shown in FIG. 4B, the torsional spring hinge 22 between the three separate reconfigurable intelligence surfaces 101 may elastically drive the three separate reconfigurable intelligence surfaces to form a single-layer tiled state. Similarly, in FIG. 5, when the support pan-tilt 41 controls five separate reconfigurable intelligence surfaces to a state shown in FIG. 5A, the torsional spring hinge 22 between the five separate reconfigurable intelligence surfaces 101 may elastically drive the five separate reconfigurable intelligence surfaces to form a single-layer tiled state.

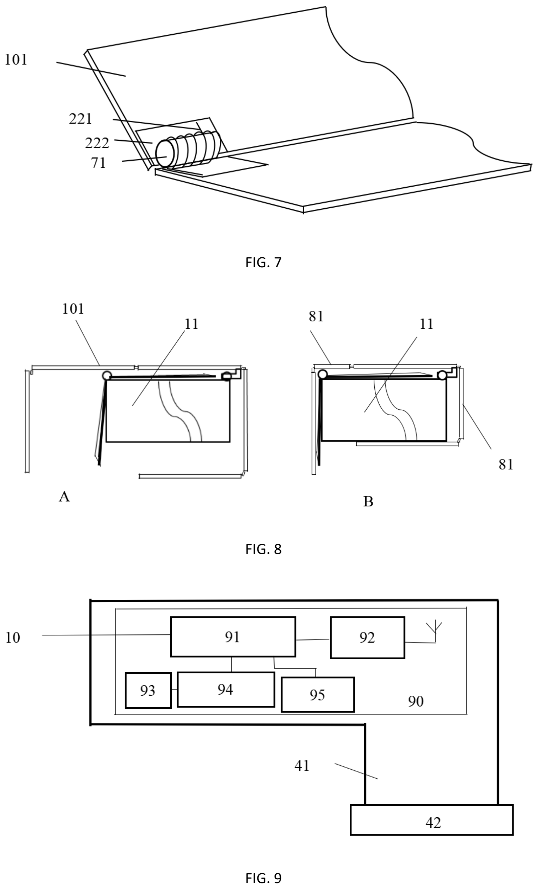

Optionally, a third motor may be arranged at the torsional spring hinge. In this way, in the unfolded state of the plurality of separate reconfigurable intelligence surfaces, the third motor may be configured to drive the torsional spring hinge to adjust an included angle between the plurality of separate reconfigurable intelligence surfaces, so that the plurality of separate reconfigurable intelligence surfaces present different unfolded states. As shown in FIG. 7, two separate reconfigurable intelligence surfaces 101 shown in FIG. 7 are connected by the torsional spring hinge, in which 221 is a torsional spring part of the torsional spring hinge, and 222 is a hinge part of the torsional spring hinge. The third motor 71 is arranged at the torsional spring hinge, and the third motor 71 may drive the torsional spring hinge to adjust the included angle between the two separate reconfigurable intelligence surfaces to any angle. The third motor 71 may be powered and controlled by the reconfigurable intelligence surface accessory device, or by the terminal.

As mentioned earlier, the unfolded state of the plurality of separate reconfigurable intelligence surfaces may include at least one of a single-layer tiled state, a single-layer non-tiled state, a state of semi-surrounding the terminal, or a state of fully surrounding the terminal. In practical applications, considering that the terminal may be a terminal with a display screen, in order to avoid affecting the user's viewing of the displayed content on the screen of the terminal, optionally, the separate reconfigurable intelligence surfaces may be set to be in a transparent state in a case where a separate reconfigurable intelligence surface corresponds to the front of the screen of the terminal. For example, in a case where the plurality of separate reconfigurable intelligence surfaces semi-surround or fully surround the terminal, there is a high probability that the front of the screen of the terminal is covered with one or more separate reconfigurable intelligence surfaces. Therefore, setting the one or more separate reconfigurable intelligence surfaces to the transparent state may avoid affecting the user's viewing of the content on the screen.

In addition, in an application scenario where the terminal performs millimeter wave high-frequency communication, the communication performance of the terminal is severely reduced due to the front of the screen of the terminal is obstructed by a middle frame. At this time, if the plurality of separate reconfigurable intelligence surfaces semi-surround or fully surround the front of the screen of the terminal, and the separate reconfigurable intelligence surface corresponds to the front of the screen is in the transparent state, it can enhance the communication capability of the front of the screen without affecting the user's viewing of the content on the screen.

Optionally, considering that sizes of different terminals may vary, in a state where the plurality of separate reconfigurable intelligence surfaces surround or semi-surround the terminal, there may be a case where the separate reconfigurable intelligence surface is not attached to an outer surface of the terminal, resulting in a larger occupied space. Therefore, at least one of the plurality of separate reconfigurable intelligence surfaces may be set as a stretchable separate reconfigurable intelligence surface. In this way, in the state where the plurality of separate reconfigurable intelligence surfaces semi-surround the terminal or fully surround the terminal, the plurality of separate reconfigurable intelligence surfaces may be controlled to be attached to the outer surface of the terminal through the stretchable separate reconfigurable intelligence surface.

As shown in FIG. 8, illustration is made in FIG. 8 by taking a reconfigurable intelligence surface accessory device including five separate reconfigurable intelligence surfaces as an example. In FIG. 8A, the five separate reconfigurable intelligence surfaces 101 are in a state of fully surrounding a terminal 11. From FIG. 8A, it can be seen that the five separate reconfigurable intelligence surfaces are not attached to an outer surface of the terminal 11, and there is a moving gap left between them. In this case, some of the five separate reconfigurable intelligence surfaces may be set as stretchable separate reconfigurable intelligence surfaces. As shown in FIG. 8B, two of the five separate reconfigurable intelligence surfaces may be set as the stretchable separate reconfigurable intelligence surfaces 81. By contracting the two stretchable separate reconfigurable intelligence surfaces 81, the five separate reconfigurable intelligence surfaces can be attached to the outer surface of the terminal 11 in a case of fully surrounding the terminal.

Optionally, the reconfigurable intelligence surface accessory device in the embodiment of the present application may further include a control circuit board. The control circuit board may be internally provided with at least one of a controller, a memory, a communication module, a battery, or a power management module. The controller may be a single-chip microcomputer controller, which may be configured to control communication between electromagnetic units of the plurality of separate reconfigurable intelligence surfaces and control the power supply of a motor. The motor here may include the above-recorded first motor for driving a first rotating shaft at a shielding outer cover, second motor for driving a second rotating shaft at a support pan-tilt, and third motor arranged at a torsional spring hinge. In a case of supply power to the motor, the controller may control the folding or unfolding of the plurality of separate reconfigurable intelligence surfaces. The memory may be configured to store a control program for the controller, and the control program includes a control program for the first motor, second motor and third motor above, as well as a control program for folding and unfolding the plurality of separate reconfigurable intelligence surfaces. The communication module may be used for near field communication between the controller and the terminal, and the near field communication may involve transmitting data or instructions between the terminal and the controller. The communication methods include at least two types: wireless communication such as Bluetooth, ultra wide band (UWB), and wireless fidelity (WIFI), and wired communication such as USB On the Go (OTG, a data communication protocol). The battery may be configured to power the reconfigurable intelligence surface accessory device, and may also be configured to power the first motor, second motor, and third motor above. The power management module is configured to control charging and discharging of the battery through the controller. A charging source may be a separate mains supply or powered by a universal serial bus (USB) of the terminal. Charging may be achieved through the USB or a dedicated charging port. The power management module may be connected to the terminal, and the connection method may include an electrical connection, etc.

Optionally, in a case where the reconfigurable intelligence surface accessory device is connected to the terminal through the support pan-tilt, the above control circuit board may be arranged in the support pan-tilt, as shown in FIG. 9 specifically. In FIG. 9, a control circuit board 90 is arranged inside the support pan-tilt 41, and internally includes a controller 91, a communication module 92, a battery 93, a power management module 94, and a memory 95. The controller 91 is electrically and wirelessly connected to the reconfigurable intelligence surface accessory device 10, so as to control the communication of electromagnetic units of the plurality of separate reconfigurable intelligence surfaces in the reconfigurable intelligence surface accessory device 10, and further control the power supply of each motor in the reconfigurable intelligence surface accessory device 10. The controller 91 may further be connected to the communication module 92 and the memory 95 to control the communication between the communication module 92 and the terminal, as well as the storage of the control programs in the memory 95. The power management module 94 is connected to the battery 93 and the controller 91, and may control the charging and discharging of the battery 93 through the controller 91. In addition, the power management module 94 may further be electrically connected to the terminal (not shown in FIG. 9). The connection method between the devices shown in FIG. 9 may be an electrical connection, a wireless or wired connection, etc.

As mentioned earlier, the plurality of separate reconfigurable intelligence surfaces in the embodiment of the present application include a multi-layer stacked and folded state, a single-layer tiled state, a single-layer non-tiled state, a state of semi-surrounding the terminal, and a state of fully surrounding the terminal, and the plurality of separate reconfigurable intelligence surfaces may flexibly switched between these multiple states. In this way, in order to meet the communication needs of the terminal in different communication environments under different states of the plurality of separate reconfigurable intelligence surfaces, the plurality of separate reconfigurable intelligence surfaces need to be multifunctional, that is, the plurality of separate reconfigurable intelligence surfaces need to have both a transmission function and a reflection function. That is to say, the plurality of separate reconfigurable intelligence surfaces in the embodiment of the present application need to adopt a simultaneously transmitting and reflecting reconfigurable intelligent surface (STAR-RIS) or an intelligent omni-surface (IOS) with both the transmission function and the reflection function. In this way, by controlling folding or unfolding of the plurality of separate reconfigurable intelligence surfaces in different communication environments, and simultaneously controlling the plurality of separate reconfigurable intelligence surfaces to correspond to the transmission function or the reflection function or simultaneously correspond to the transmission function and the reflection function, the communication needs of the terminal in different communication environments can be met, and flexible applications can be achieved in the complex and ever-changing wireless communication scenarios.

Optionally, in the folded state, the plurality of separate reconfigurable intelligence surfaces may correspond to the transmission function. That is, the plurality of separate reconfigurable intelligence surfaces in the folded state need to work simultaneously in a transmission state to assist the terminal in performing uplink enhancement. This is because it is meaningless for the plurality of separate reconfigurable intelligence surfaces in the folded state to work simultaneously in a reflection state. In some cases, in the folded state, if downlink communication is performed, an initial gain of a far-field signal is small due to a small area of an outer layer of reconfigurable intelligence surface. Moreover, noise introduced by the propagation environment in the far-field signal will be further amplified during the penetration of multiple layers of reconfigurable intelligence surfaces, resulting in ineffective downlink enhancement. In addition, when the multiple layers of reconfigurable intelligence surfaces work in the reflection state simultaneously, it can seriously block an uplink signal of the terminal from penetrating through the multiple layers of reconfigurable intelligence surfaces. Moreover, since only the outermost layer of reconfigurable intelligence surface has effective reflection, the gain reflected by the reconfigurable intelligence surface to other peripheral terminals is also very limited, resulting in ineffective downlink enhancement. When the plurality of separate reconfigurable intelligence surfaces work simultaneously in the transmission state, due to the low impact of transmission on the original noise and a shielding outer cover covered on the plurality of separate reconfigurable intelligence surfaces, the amplitude may be adjusted on the basis of near-field signal phase modulation, thus effectively achieving uplink enhancement. It can be seen that in the folded state, the plurality of separate reconfigurable intelligence surfaces need to be corresponding to the transmission function for uplink enhancement.

Optionally, in the unfolded state, because the unfolding method of the plurality of separate reconfigurable intelligence surfaces include at least one of single-layer tiling, single-layer non-tiling, semi-surrounding the terminal, or fully surrounding the terminal, and the plurality of separate reconfigurable intelligence surfaces are configured to assist at least one of the terminal or the peripheral terminal of the terminal in performing uplink communication and/or downlink communication, the plurality of separate reconfigurable intelligence surfaces can correspond to the reflection function and/or the transmission function flexibly. In some cases, the plurality of separate reconfigurable intelligence surfaces in the unfolded state may have at least one operating mode, and the at least one operating mode may include at least one of energy splitting, mode switching, or time switching. For any separate reconfigurable intelligence surface, energy splitting represents that all electromagnetic units in the separate reconfigurable intelligence surface correspond to the transmission function and the reflection function simultaneously. That is, all the electromagnetic units in the separate reconfigurable intelligence surface can perform both transmission and reflection. Mode switching represents that some electromagnetic units in the separate reconfigurable intelligence surface correspond to the transmission function, and other electromagnetic units correspond to the reflection function. That is, the electromagnetic units in the separate reconfigurable intelligence surface either work in transmission or reflection. Tme switching represents that all the electromagnetic units in the separate reconfigurable intelligence surface correspond to the transmission function and the reflection function in a time-division manner. That is, in each time cycle, all the electromagnetic units in the separate reconfigurable intelligence surface operate in reflection during a first time period and operate in transmission during a second time period, or operate in transmission during the first time period and operate in reflection during the second time period. A sum of the first time period and the second time period forms one time cycle. In the unfolded state, the transmission function of the reconfigurable intelligence surface may serve the uplink enhancement for the terminal, and the reflection function may serve the downlink enhancement for the peripheral terminal. When serving the downlink enhancement for the peripheral terminal, the reconfigurable intelligence surface may be not limited to assisting in downlink communication, but may also be used for energy transfer, a perception function, and so on.

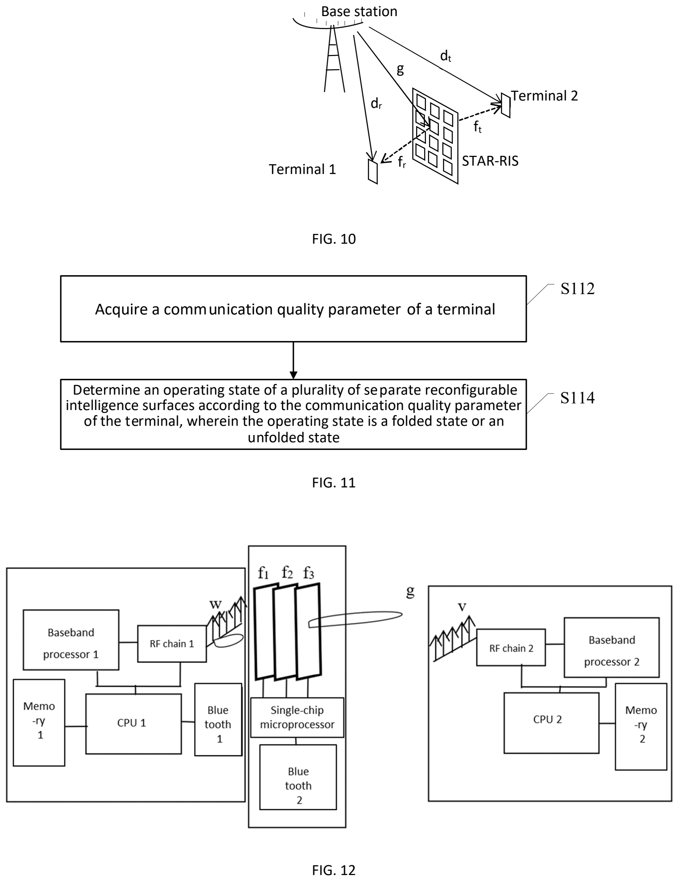

For the convenience of understanding the operating mode of the separate reconfigurable intelligence surfaces in the unfolded state, namely energy splitting, mode switching, and time switching, reference may be made to FIG. 10. FIG. 10 is a schematic diagram of performing communication based on an STAR-RIS according to an embodiment of the present application. It can be seen from FIG. 10 that a signal $s_n$ ($s_n$ represents the quantity of electromagnetic units incident on the STAR-RIS) incident on the STAR-RIS from a base station will simultaneously undergo reflection and transmission to reach a terminal 1 and a terminal 2. An incident channel is $g$, a reflection channel is $f_r$, a transmission channel is $f_t$, and there are also a direct channel $d_r$ and a direct channel $d_t$ from the base station to the terminal 1 and the terminal 2, respectively. In this case, a reflected signal received by the terminal 1 and a transmitted signal received by the terminal 2 may be respectively represented as:

$$r_n = \sqrt{\beta_n^r}\, e^{j\theta_n^r} s_n\,;$$

$$t_n = \sqrt{\beta_n^t}\, e^{j\theta_n^t} s_n\,.$$

Where, coefficients $\beta_n^t \in [0,1], \beta_n^r \in [0,1]$ are allocated to transmission and reflection amplitudes of the incident signal.

A phase shift coefficient of the incident signal is $\theta_n^t \in [0,2\pi), \theta_n^r \in [0,2\pi)$. Unlike a conventional RIS that only modulates phase shift, the STAR-RIS also requires amplitude modulation. Therefore, in a case where there is no loss in the transmission or reflection of each electromagnetic unit, $\beta_n^t + \beta_n^r = 1$.

Furthermore, under a premise that impedance of the electromagnetic units is zero, $\sqrt{\beta_n^t}\sqrt{\beta_n^r}\cos(\theta_n^t - \theta_n^r) = 0$. This means that the phase shift coefficients of transmission and reflection are paired and satisfy: $|\theta_n^t - \theta_n^r| = \dfrac{\pi}{2}, \dfrac{3\pi}{2}$.

Based on the above signal model, the STAR-RIS may have the following three operating modes in total: energy splitting, mode switching, and time switching.

1. Energy splitting (ES).

In this mode, all the electromagnetic units operate in transmission and reflection, and transmission and reflection coefficient matrices are respectively:

$$\Theta_t^{ES} = diag(\sqrt{\beta_1^t}e^{j\theta_1^t}, \sqrt{\beta_2^t}e^{j\theta_2^t}, ..., \sqrt{\beta_M^t}e^{j\theta_M^t});$$

$$\Theta_r^{ES} = diag(\sqrt{\beta_1^r}e^{j\theta_1^r}, \sqrt{\beta_2^r}e^{j\theta_2^r}, ..., \sqrt{\beta_M^r}e^{j\theta_M^r});$$

$$s.t. \beta_m^t, \beta_m^r \in [0,1], \beta_m^t + \beta_m^r = 1, \theta_m^t, \theta_m^r \in [0, 2\pi),$$

M≤n.

2. Mode switching (MS).

In this mode, some of all the electromagnetic units operate in transmission, and other electromagnetic units operate in reflection. The transmission and reflection coefficient matrices are respectively ($M^t$ is the quantity of electromagnetic units operating in transmission, $M^r$ is the quantity of electromagnetic units operating in reflection, $M^t + M^r = M$, $M \leq$ n, and MS is equivalent to a special case of ES):

$$\Theta_t^{MS} = diag(\sqrt{\beta_1^t}e^{j\theta_1^t}, \sqrt{\beta_2^t}e^{j\theta_2^t}, ..., \sqrt{\beta_M^t}e^{j\theta_{M^t}^t});$$

$$\Theta_r^{MS} = diag(\sqrt{\beta_1^r}e^{j\theta_1^r}, \sqrt{\beta_2^r}e^{j\theta_2^r}, ..., \sqrt{\beta_M^r}e^{j\theta_{M^r}^r});$$

$$s.t. \beta_m^t, \beta_m^r \in [0,1], \beta_m^t + \beta_m^r = 1, \theta_m^t, \theta_m^r \in [0, 2\pi).$$

3. Time switching (TS).

In this mode, all the electromagnetic units operate in transmission or reflection in a time-division manner, and transmission and reflection coefficient matrices are respectively:

$$\Theta_t^{TS} = diag(e^{j\theta_1^t}, e^{j\theta_2^t}, ..., e^{j\theta_M^t}), \quad 0 \leq t \leq \lambda^t T;$$

$$\Theta_r^{TS} = diag(e^{j\theta_1^r}, e^{j\theta_2^r}, ..., e^{j\theta_M^r}), \quad \lambda^r T < r \leq T;$$

$$s.t. \lambda^t, \lambda^r \in [0,1], \lambda^t + \lambda^r = 1, \theta_m^t, \theta_m^t \in [0, 2\pi)$$ ,

T is a cycle of time-division operating.

Based on the reconfigurable intelligence surface accessory device provided in the embodiment of the present application, for a communication terminal, after the terminal is fixedly or detachably connected to the reconfigurable intelligence surface accessory device, in the folded state, all the separate reconfigurable intelligence surfaces need to be configured with the transmission function and used for uplink enhancement, which is applicable to a scenario where the terminal is in a strong signal region. Because the multiple layers of separate reconfigurable intelligence surfaces may be subjected to phase modulation and amplitude adjustment, power enhancement may be achieved, and power consumption of the enhancement degree is much lower than transmitting power consumption of the terminal's own radio frequency chain under the same conditions. Whether the accessory device is used for fixed terminals such as CPE or mobile terminals such as a mobile phone, a significant energy-saving effect can be achieved. In the unfolded state, the plurality of separate reconfigurable intelligence surfaces may have various unfolding forms, such as a single-layer tiled form, a single-layer non-tiled form, a form of semi-surrounding the terminal or a form of fully surrounding the terminal. At this time, a certain one of the plurality of separate reconfigurable intelligence surfaces may be configured as uplink and the several other separate reconfigurable intelligence surfaces are configured as downlink. In this way, when the terminal is in a weak signal region or a strong interference region in a neighboring region, both downlink enhancement and uplink enhancement can be performed, and the overall enhancement power consumption of the surfaces is much lower than the self-enhancement power consumption of the terminal. Certainly, in the unfolded state, the plurality of separate reconfigurable intelligence surfaces may also be configured as both uplink and downlink simultaneously, or used for uplink and downlink in a time-division manner, thus enabling flexible applications in the complex and ever-changing wireless communication scenarios.

In summary, the reconfigurable intelligence surface accessory device provided in the embodiment of the present application may be fixedly or detachably connected to the terminal. The accessory device includes the plurality of separate reconfigurable intelligence surfaces which are connected. The plurality of separate reconfigurable intelligence surfaces have the folded state and the unfolded state. In the folded state, the accessory device may be configured to assist the terminal in performing uplink communication, and in the unfolded state, the accessory device may be configured to assist at least one of the terminal or its peripheral terminal in performing uplink communication and/or downlink communication. Therefore, when the terminal has the communication need, the terminal may be assisted in performing uplink enhancement by folding the plurality of separate reconfigurable intelligence surfaces, and at least one of the terminal or its peripheral terminal may be assisted in performing uplink communication and/or downlink enhancement by unfolding the plurality of separate reconfigurable intelligence surfaces. Thus, the communication environment and state of the terminal and/or the peripheral terminal can be improved, and the communication needs of the terminal and/or the peripheral terminal are met. In addition, as the plurality of separate reconfigurable intelligence surfaces may assist terminal in performing uplink communication in the folded state, the radio frequency chain transmitting power of the terminal can be effectively reduced, and the power consumption of the terminal is saved. As the plurality of separate reconfigurable intelligence surfaces may assist at least one of the terminal and/or the peripheral terminal in performing uplink enhancement and/or downlink enhancement in the unfolded state, the transmission needs of the terminal for their own and the peripheral terminal in uplink and/or downlink, thus achieving flexible applications in the complex and ever-changing wireless communication scenarios.

Based on the reconfigurable intelligence surface accessory device provided in the embodiment of the present application, an embodiment of the present application further provide a terminal communication method applied to a terminal. The terminal is fixedly connected or detachably connected to the reconfigurable intelligence surface accessory device. Please refer to the embodiment shown in FIG. 11 for details.

FIG. 11 is a schematic flowchart of a terminal communication method according to an embodiment of the present application. The embodiment shown in FIG. 11 includes the following steps.

At S112, a communication quality parameter of a terminal is acquired.

The terminal may acquire its own communication quality parameter during communication. The communication quality parameter may be a parameter related to a communication quality of the terminal. Optionally, the communication quality parameter may include a received signal quality parameter of the terminal, an uplink and downlink signal strength, a strength of a signal received from a front of a display screen (if any) of the terminal, etc. The received signal quality parameter of the terminal may include but is not limited to at least one of the following:

reference signal receiving power (RSRP);
a received signal strength indicator (RSSI);
reference signal receiving quality (RSRQ);
a signal to interference plus noise ratio (SINR); or

a carrier to interference plus noise ratio (CINR).

At S114, an operating state of a plurality of separate reconfigurable intelligence surfaces is determined according to the communication quality parameter of the terminal, wherein the operating state is a folded state or an unfolded state.

After acquiring its own communication quality parameter, the terminal may determine whether to perform uplink enhancement or downlink enhancement according to the communication quality parameter, and then determine the operating state of the plurality of separate reconfigurable intelligence surfaces in the reconfigurable intelligence surface accessory device. The operating state includes the folded state or the unfolded state. For example, if the terminal determines to perform uplink enhancement, it may be determined that the operating state of the plurality of separate reconfigurable intelligence surfaces is the folded state. If the terminal determines to perform both uplink enhancement and downlink enhancement simultaneously, it may be determined that the operating state of the plurality of separate reconfigurable intelligence surfaces is the unfolded state.

Optionally, in an implementation, determining the operating state of the plurality of separate reconfigurable intelligence surfaces according to the communication quality parameter of the terminal may include that: in a case where the communication quality parameter of the terminal is greater than or equal to a preset quality parameter value, it is determined that the operating state of the separate reconfigurable intelligence surfaces is the folded state; or in a case where the communication quality parameter of the terminal is less than the preset quality parameter value, it is determined that the operating state of the separate reconfigurable intelligence surfaces is the unfolded state.

The preset quality parameter value may be set according to actual communication needs, and which is not specifically limited here. The communication quality parameter of the terminal is greater than or equal to the preset quality parameter value, which may mean that the communication quality parameter of the terminal is continuously greater than or equal to the preset quality parameter value within a certain period of time (which may be set according to actual communication needs). In the case of continuously being greater than or equal to the preset quality parameter value, it may be determined that the terminal is currently in a strong signal region, and the terminal may perform uplink enhancement to reduce the power consumption of its own radio frequency chain. At this time, it may be determined that the operating state of the plurality of separate reconfigurable intelligence surfaces is in the folded state, that is, the plurality of separate reconfigurable intelligence surfaces need to be folded.

The communication quality parameter of the terminal is less than the preset quality parameter value, which may mean that the communication quality parameter of the terminal is continuously lower than the preset quality parameter value within a certain period of time (which may also be set according to actual communication needs). In the case of continuously being lower than the preset quality parameter value, it may be determined that the terminal is currently in a weak signal region, and the terminal needs to perform downlink enhancement or perform uplink enhancement and downlink enhancement simultaneously. At this time, it may be determined that the operating state of the plurality of separate reconfigurable intelligence surfaces is in the unfolded state, that is, the plurality of separate reconfigurable intelligence surfaces need to be unfolded.

Optionally, in a case where the terminal is a mobile terminal or a fixed terminal sensitive to the power consumption, when determining the operating state of the plurality of separate reconfigurable intelligence surfaces, the operating state of the plurality of separate reconfigurable intelligence surfaces may further be jointly determined in combination with the power consumption situation of the terminal itself. For example, if the electric power of the terminal is insufficient and the terminal is in a strong signal region, the operating state may be determined as the folded state and used for uplink enhancement to compensate for the transmitting power of the radio frequency chain of the terminal and reduce the power consumption of the terminal. For another example, if the electric power of the terminal is insufficient and the terminal is in a weak signal area, the operating state may be determined as the unfolded state and used for performing uplink enhancement and downlink enhancement simultaneously. In this way, the downlink communication quality may further be improved while compensating for the transmitting power of the radio frequency chain of the terminal and reducing the power consumption of the terminal. For another example, if the electric power of the terminal is sufficient and in a weak signal region, the operating state may be determined as the unfolded state and used for downlink enhancement without the need for uplink enhancement.

Optionally, when determining the operating state of the plurality of separate reconfigurable intelligence surfaces, the terminal may further acquire information about the reconfigurable intelligence surface accessory device, and jointly determine the operating state of the plurality of separate reconfigurable intelligence surfaces based on this information and the communication quality parameter of the terminal itself. In some cases, in a case where the reconfigurable intelligence surface accessory device is fixedly or detachably connected to the terminal, the reconfigurable intelligence surface accessory device and the terminal may perform wireless communication through near field communication modules of both parties or perform wired communication through USB OTG. During communication, the reconfigurable intelligence surface accessory device may send information such as the quantity and material state (such as whether the surface is a transparent surface, etc.) of the separate reconfigurable intelligence surfaces included in the accessory device to the terminal, and the terminal may acquire the information about the reconfigurable intelligence surface accessory device. The terminal may jointly determine the operating state of the plurality of separate reconfigurable intelligence surfaces according to the acquired information and the communication quality parameter itself. It should be noted that the operating state of the plurality of separate reconfigurable intelligence surfaces may be determined mainly based on the communication quality parameter of the terminal itself, supplemented by the information about the reconfigurable intelligence surface accessory device. The specific implementations are not illustrated in detail here.

Optionally, in a case of determining the operating state of the plurality of separate reconfigurable intelligence surfaces, the terminal may further perform at least one of the following (1) to (4).

(1) Radio frequency chain transmitting power of the terminal is reduced in a case where the operating state is the folded state.

In the folded state, because the plurality of separate reconfigurable intelligence surfaces are used for uplink enhancement, some of the uplink transmitting power may be compensated. Therefore, the terminal may appropriately reduce its own radio frequency chain transmitting power to reduce radio frequency chain power consumption. For the mobile terminal, the battery life of the terminal can be extended after reducing its own radio frequency chain transmitting power.

(2) The radio frequency chain transmitting power of the terminal is maintained or increased according to a dynamic value of the communication quality parameter of the terminal in a case where the operating state is the unfolded state.

In the unfolded state, because the plurality of separate reconfigurable intelligence surfaces may be used for uplink enhancement and/or downlink enhancement, the terminal may maintain or increase its own radio frequency chain transmitting power according to the dynamic value of the communication quality parameter after actual uplink enhancement and/or downlink enhancement. For example, if the plurality of separate reconfigurable intelligence surfaces are configured for downlink enhancement in the unfolded state but not for uplink enhancement, the uplink transmitting power cannot be compensated. At this time, if the radio frequency chain transmitting power of the terminal is low, the terminal can increase its own radio frequency chain transmitting power so as to ensure the stability of uplink communication. For another example, if the plurality of separate reconfigurable intelligence surfaces are used for uplink enhancement and downlink enhancement simultaneously in the unfolded state, uplink enhancement may compensate for the uplink transmitting power appropriately, and then the terminal at this time may maintain its own radio frequency chain transmitting power.

(3) The configuration information for the plurality of separate reconfigurable intelligence surfaces is determined according to the operating state.

In a case where the operating state is the folded state, the configuration information may include that the plurality of separate reconfigurable intelligence surfaces correspond to a transmission function. That is, the plurality of separate reconfigurable intelligence surfaces need to work in a transmission state. In a case where the operating state is the unfolded state, the configuration information may include at least one of an operating mode of the plurality of separate reconfigurable intelligence surfaces, separate reconfigurable intelligence surfaces corresponding to different operating modes, an unfolding method, an unfolding angle, or a coverage direction.

The operating mode of the plurality of separate reconfigurable intelligence surfaces include at least one of energy splitting, mode switching, or time switching as recorded above. In some cases, in the unfolded state, the operating mode of the plurality of separate reconfigurable intelligence surfaces may be: all in energy splitting, or all in mode switching, or all in time switching, or some in energy splitting and others in mode switching, or some in energy splitting and others in time switching, or some in mode switching and others in time switching, or some in energy splitting, some in mode switching and others in time switching. If the plurality of separate reconfigurable intelligence surfaces include at least two operating modes, it is necessary to further determine which separate reconfigurable intelligence surfaces correspond to each operating mode. For example, if some of the plurality of separate reconfigurable intelligence surfaces are in mode switching and some are in time switching, it is necessary to further determine which separate reconfigurable intelligence surfaces correspond to mode switching and which separate reconfigurable intelligence surfaces correspond to time switching.

The unfolding method includes at least one of single-layer tiling, single-layer non-tiling, semi-surrounding the terminal, or fully surrounding the terminal. The unfolding angle may be an included angle between the plurality of separate reconfigurable intelligence surfaces, or an included angle between the plurality of separate reconfigurable intelligence surfaces and the terminal. The coverage direction may be in which direction the plurality of separate reconfigurable intelligence surfaces cover the terminal. For example, the plurality of separate reconfigurable intelligence surfaces cover a front of a screen of the terminal or cover a side surface of the terminal.

When determining the above configuration information, the terminal may comprehensively determine the configuration information according to its own communication state and the information of the reconfigurable intelligence surface accessory device, which will not be illustrated in detail here. In addition, after determining the operating state, the terminal may further confirm the power supply and power distribution with the reconfigurable intelligence surface accessory device.

(4) In the case where the operating state is the unfolded state, the configuration information of the plurality of separate reconfigurable intelligence surfaces is adjusted according to the communication quality parameter and a power consumption state of the terminal if an uplink enhancement request and/or a downlink enhancement request are/is received.

The uplink enhancement request may include an uplink enhancement request from a base station and/or a peripheral terminal, and the uplink enhancement request may be used for the base station and/or the peripheral terminal to request the terminal to perform uplink enhancement through the reconfigurable intelligence surface accessory device. The downlink enhancement request may include a downlink enhancement request from the base station and/or the peripheral terminal, and the downlink enhancement request may be used for the base station and/or the peripheral terminal to request the terminal to perform downlink enhancement through the reconfigurable intelligence surface accessory device.

For the terminal, in a case where it is determined that the operating state of the plurality of separate reconfigurable intelligence surfaces is the unfolded state, if the uplink enhancement request and/or the downlink enhancement request are/is received, the terminal may communicate with a requester (the base station and/or the peripheral terminal) to confirm whether the requester indeed has a need for performing uplink and/or downlink enhancement, and if so, the terminal may assist the requester in performing uplink and/or downlink enhancement through the plurality of separate reconfigurable intelligence surfaces. When the terminal assists the requester in performing uplink and/or downlink enhancement through the plurality of separate reconfigurable intelligence surfaces, the configuration information of the plurality of separate reconfigurable intelligence surfaces may be adjusted, so that the requester may be assisted in performing uplink and/or downlink communication through the plurality of separate reconfigurable intelligence surfaces after the configuration information is adjusted. The configuration information of the plurality of separate reconfigurable intelligence surfaces may include at least one of the operating mode of the plurality of separate reconfigurable intelligence surfaces, the separate reconfigurable intelligence surfaces corresponding to different operating modes, the unfolding method, the unfolding angle, or the coverage direction, which may specifically refer to the relevant description for the configuration information in item (3) above, and is not repeated here. When adjusting the configuration information of the plurality of separate reconfigurable intelligence surfaces, the terminal may adjust the configuration information according to its own communication quality parameter and power consumption state. The specific implementation for adjusting the configuration information is not illustrated in detail here.

It should be noted that when determining the operating state of the plurality of separate reconfigurable intelligence surfaces, the terminal considers its own communication quality parameter and does not consider the communication situation of the peripheral terminal. The reason is that the reconfigurable intelligence surface accessory device is connected to the terminal, and when the terminal assists communication through the reconfigurable intelligence surface accessory device, the priority of assisting the terminal itself in performing communication is higher than that of assisting the peripheral terminal in performing communication. Therefore, when the operating state is determined, the communication quality parameter of the terminal itself is given priority, and the communication situation of the peripheral terminal is not considered. After determining the operating state, in order to meet the communication needs of the peripheral terminal, the terminal may take into account the communication situation of the peripheral terminal in a case where the operating state is the unfolded state. That is, when the uplink enhancement request and/or the downlink enhancement request sent by at least one of the base station or the peripheral terminal are/is received, the configuration information of the plurality of separate reconfigurable intelligence surfaces may be adjusted to assist the peripheral terminal in performing uplink and/or downlink communication, thereby meeting the communication needs of the peripheral terminal.

It should further be noted that in the case where the plurality of separate reconfigurable intelligence surfaces are in the unfolded state, the uplink enhancement request and/or the downlink enhancement request received by the terminal from the base station may be divided into two situations. In the first situation, the base station evaluates that the peripheral terminal has the uplink enhancement and/or downlink enhancement needs according to the information containing the communication quality parameter and reported by the peripheral terminal, and then proposes the uplink enhancement request and/or the downlink enhancement request to the terminal. In the second situation, the base station dynamically proposes the uplink enhancement request and/or the downlink enhancement request to the terminal according to the communication environment of a cell. The first situation is equivalent to the base station conveying the uplink enhancement and/or downlink enhancement needs of the peripheral terminal to the terminal. At this time, the peripheral terminal usually does not have a D2D function and cannot directly send request information to the terminal like a peripheral terminal with the D2D function.

Optionally, the terminal may further send notification information to the reconfigurable intelligence surface accessory device after determining the operating state and the configuration information of the plurality of separate reconfigurable intelligence surfaces (when the operating state is the unfolded state, if the uplink enhancement request and/or the downlink enhancement request are/is not received, the configuration information may be the configuration information determined in item (3) above, and if the uplink enhancement request and/or the downlink enhancement request are./is received, the configuration information may be the configuration information adjusted in item (4) above). The notification information may include the operating state and/or the configuration information of the plurality of separate reconfigurable intelligence surfaces. The notification information may be used for the reconfigurable intelligence surface accessory device to adjust the operating state and/or configuration of the plurality of separate reconfigurable intelligence surfaces. When sending the notification information to the reconfigurable intelligence surface accessory device, the terminal may perform wireless transmission or wired transmission through near field communication modules of both parties.

For the reconfigurable intelligence surface accessory device, after receiving the notification information sent by the terminal, the plurality of separate reconfigurable intelligence surfaces may be folded or unfolded according to the operating state in the notification information, and/or the plurality of separate reconfigurable intelligence surfaces may be configured according to the configuration information in the notification information. Taking the notification information including the operating state and the configuration information as an example, if the operating state is the folded state and the configuration information is that the plurality of separate reconfigurable intelligence surfaces correspond to a transmission function, the reconfigurable intelligence surface accessory device may control folding of the plurality of separate reconfigurable intelligence surfaces and meanwhile configure the plurality of separate reconfigurable intelligence surfaces as the transmission function. If the operating state is the unfolded state, the configuration information is that the operating mode of the plurality of separate reconfigurable intelligence surfaces is all in energy splitting, and the unfolding method is a single-layer tiled state, then the reconfigurable intelligence surface accessory device may control unfolding of the plurality of separate reconfigurable intelligence surfaces to the single-layer tiled state, and meanwhile configure all of the plurality of separate reconfigurable intelligence surfaces to correspond to an reflection unction and a transmission function simultaneously. The specific implementation of the reconfigurable intelligence surface accessory device for controlling the folding or unfolding of the plurality of separate reconfigurable intelligence surfaces may refer to the corresponding illustration in the embodiments shown in FIG. 1 to FIG. 9 above, and will not be described in detail here.

Optionally, when determining the operating state and the configuration information of the plurality of separate reconfigurable intelligence surfaces, the terminal may further perform the following operations that: channel state information, as well as the operating state and/or the configuration information of the plurality of separate reconfigurable intelligence surfaces are sent to the base station; configuration data of the plurality of separate reconfigurable intelligence surfaces is received from the base station, wherein the configuration data is obtained by the base station after performing a channel estimation and beamforming according to the channel state information, as well as the operating state and/or the configuration information of the plurality of separate reconfigurable intelligence surfaces; and parameter configuration is performed on the plurality of separate reconfigurable intelligence surfaces according to the configuration data.

Due to the fact that the plurality of separate reconfigurable intelligence surfaces include the folded state and the unfolded state, in the unfolded state, the plurality of separate reconfigurable intelligence surfaces include multiple unfolding methods, and different unfolding methods may correspond to different unfolding angles and coverage directions. Moreover, the plurality of separate reconfigurable intelligence surfaces may include at least one operating mode of energy splitting, mode switching, or time switching, which makes the switching of the plurality of separate reconfigurable intelligence surfaces more complex. Therefore, in order to facilitate channel estimation and beamforming by the base station, the terminal needs to send the operating state and the configuration information of the plurality of separate reconfigurable intelligence surfaces to the base station. In addition, the terminal may further send the channel state information to the base station, so that the base station may perform channel estimation and beamforming based on the channel state information (CSI). The CSI information may be measured by the terminal according to a downlink channel state information-reference signal (CSI-RS) of the base station. The CSI information may include a rank indication (RI), a precoding matrix indicator (PMI), a channel quality indicator (CQI), etc.

For the base station, after receiving the CSI information, the operating state, and/or the configuration information sent by the terminal, the base station may perform channel estimation and beamforming according to these information, thereby obtaining the configuration data for the plurality of separate reconfigurable intelligence surfaces in the reconfigurable intelligence surface accessory device.

Relative to a single user in the folded state (i.e., the terminal itself), the unfolded state corresponds to a random channel with multiple users (i.e., the terminal itself and the peripheral terminal). In the folded state, there is a low-dimensional slow change between the base station and the reconfigurable intelligence surface accessory device. In the unfolded state, there is a high-dimensional slow change between the base station and the reconfigurable intelligence surface accessory device. However, after connecting multiple users in the unfolded state, there will be a low-dimensional rapid change between the reconfigurable intelligence surface accessory device and the terminal. In addition, in the unfolded state, due to the introduction of multi-user multi-beam, there is a dual time scale. That is, there is a large time scale between the base station and the reconfigurable intelligence surface accessory device, and there is a small time scale between the reconfigurable intelligence surface accessory device and the terminal.

The base station needs to perform channel estimation before performing beamforming on the reconfigurable intelligence surface accessory device used for uplink and/or downlink enhancement. Because the reconfigurable intelligence surfaces lack a signal processing capability in general, the terminal, as an active attached communication carrier of the reconfigurable intelligence surface accessory device, may perform necessary communication handshake with the base station to reduce the difficulty in passive beamforming of the reconfigurable intelligence surface by the base station.

Due to the fact that the reconfigurable intelligence surface accessory device has a low-dimensional slow change in uplink and a high-dimensional slow change in downlink relative to the base station, the base station may use a beam configured based on CSI feedback information during uplink and downlink switching of the terminal as instantaneous CSI of a known channel state, and adjust a transmission signal and optimize a reception signal according to the known channel, which is essentially equivalent to the transmission adaption before an existing uplink channel expires.

When the reconfigurable intelligence surface accessory device switches from the folded state to the unfolded state, the reconfigurable intelligence surface accessory device changes from a multi-layer stacked state to a single-layer tiled state, a single-layer non-tiled state, a state of semi-surrounding or a state fully surrounding the terminal, and the channel changes. A channel model may be based on an SV model of a uniform planar array (UPA) (proposed by Salen and Valenzula in 1972) or a 3GPP TS 36.879 model, with the dual time scale. The high-dimensional slow change large time scale CSI between the reconfigurable intelligence surface accessory device and the base station needs to be recalculated according to the changed quantity of electromagnetic units facing the base station in the unfolded state using a compressive sensing method, while the small time scale CSI needs to be obtained by performing beam training on the fading distribution and spatial correlation of the low-dimensional fast change of the reconfigurable intelligence surface accessory device and the terminal using statistical methods including artificial intelligent (AI) and/or machine learning (ML). After channel estimation, the base station may perform joint transmit-receive beamforming on the reconfigurable intelligence surface accessory device based on a channel estimation result.

When the reconfigurable intelligence surface accessory device switches from the unfolded state to the folded state, multi-user becomes single user, single-layer large-area reconfigurable intelligence surface changes to multi-layer small-area reconfigurable intelligence surface, and a switching stage still follows instantaneous CSI. After switching is completed, the base station may re-perform channel estimation based on the SV channel model of the uniform linear array (ULA) and the CSI information feedback from the terminal. For a fixed terminal, channels of the terminal-reconfigurable intelligence surface and the reconfigurable intelligence surface-base station are both quasi-static low dimensional channels that do not require frequent estimation. For a mobile terminal, the terminal-reconfigurable intelligence surface is a static low dimensional channel that does not require frequent estimation, but the channel between the reconfigurable intelligence surface and the base station is a dynamic high-dimensional channel that requires frequent estimation. But overall, they all belong to slow change and can use instantaneous CSI. The multi-level CSI from the terminal acquired by the base station based on the channel estimation may perform joint transmit-receive beamforming on the reconfigurable intelligence surface accessory device.

Optionally, some electromagnetic units in the reconfigurable intelligence surface may be designed as active electromagnetic units, which enables the base station to add active beamforming factors to the reconfigurable intelligence surface accessory device and overcome the multiplicative fading of cascaded channels, resulting in more accurate beamforming.

After performing beamforming, the base station may obtain the configuration data for the plurality of separate reconfigurable intelligence surfaces. The configuration data includes a carrier frequency, a phase, an amplitude, etc. In a case where the operating state of the plurality of separate reconfigurable intelligence surfaces is the unfolded state and the reconfigurable intelligence surface accessory device is configured to assist the terminal and/or the peripheral terminal in performing downlink communication, the configuration data of the plurality of separate reconfigurable intelligence surfaces may be determined according to a signal to interference plus noise ratio of a signal received by the terminal. The signal to interference plus noise ratio of the signal received by the terminal may be determined according to a downlink signal, a downlink interference signal, and a downlink noise signal received by the terminal. The downlink signal may be determined according to a downlink communication parameter of the terminal, and the downlink communication parameter of the terminal may include a receiving combination vector of the terminal, a downlink beamforming vector of the base station, a downlink channel coefficient between the terminal and the base station, a downlink channel coefficient between the terminal and the plurality of separate reconfigurable intelligence surfaces, a downlink channel coefficient between the base station and the plurality of separate reconfigurable intelligence surfaces, and downlink phase and amplitude shift coefficients of the plurality of separate reconfigurable intelligence surfaces corresponding to the operating mode. The downlink interference signal may be determined according to a downlink communication parameter of the peripheral terminal, and the downlink communication parameter of the peripheral terminal may include a receiving combination vector of the peripheral terminal, a downlink beamforming vector of the base station, a downlink channel coefficient between the peripheral terminal and the base station, a downlink channel coefficient between the peripheral terminal and the plurality of separate reconfigurable intelligence surfaces, a downlink channel coefficient between the base station and the plurality of separate reconfigurable intelligence surfaces, and downlink phase and amplitude shift coefficients of the plurality of separate reconfigurable intelligence surfaces corresponding to the operating mode. The downlink noise signal is in complex Gaussian distribution.

In a case where the operating state of the plurality of separate reconfigurable intelligence surfaces is the unfolded state and the reconfigurable intelligence surface accessory device is configured to assist the terminal and/or the peripheral terminal in performing uplink communication, the configuration data of the plurality of separate reconfigurable intelligence surfaces may be determined according to a signal to interference plus noise ratio of a signal received by the base station. The signal to interference plus noise ratio of the signal received by the base station may be determined according to an uplink signal, an uplink interference signal, and an uplink noise signal received by the terminal. The uplink signal may be determined according to an uplink communication parameter of the terminal, and the uplink communication parameter of the terminal may include a receiving combination vector of the base station, an uplink beamforming vector of the terminal, an uplink channel coefficient between the terminal and the base station, an uplink channel coefficient between the terminal and the plurality of separate reconfigurable intelligence surfaces, an uplink channel coefficient between the base station and the plurality of separate reconfigurable intelligence surfaces, and uplink phase and amplitude shift coefficients of the plurality of separate reconfigurable intelligence surfaces corresponding to the operating mode. The an uplink interference signal may be determined according to an uplink communication parameter of the peripheral terminal, and the uplink communication parameter of the peripheral terminal may include a receiving combination vector of the base station, an uplink beamforming vector of the peripheral terminal, an uplink channel coefficient between the peripheral terminal and the base station, an uplink channel coefficient between the peripheral terminal and the plurality of separate reconfigurable intelligence surfaces, an uplink channel coefficient between the base station and the plurality of separate reconfigurable intelligence surfaces, and uplink phase and amplitude shift coefficients of the plurality of separate reconfigurable intelligence surfaces corresponding to the operating mode. The uplink noise signal is in complex Gaussian distribution.

After obtaining the configuration data, the base station may send the configuration data to the terminal. After receiving the configuration data, the terminal may perform parameter configuration on the plurality of separate reconfigurable intelligence surfaces according to the configuration data. When performing parameter configuration on the plurality of separate reconfigurable intelligence surfaces according to the configuration data, the terminal may first send the configuration data to the reconfigurable intelligence surface accessory device, and then the reconfigurable intelligence surface accessory device may perform parameter configuration on the plurality of separate reconfigurable intelligence surfaces according to the configuration data. It should be noted that the reason why the configuration data is sent to the reconfigurable intelligence surface accessory device through the terminal is that the reconfigurable intelligence surface accessory device only has a near field communication module, and cannot communicate with the base station. Therefore, in order to avoid low channel accuracy caused by passive beamforming of the base station to the reconfigurable intelligence surface accessory device in a completely blind state, the base station needs to inform the terminal of the configuration data of the plurality of separate reconfigurable intelligence surfaces, then the terminal transfers the configuration data to the reconfigurable intelligence surface accessory device, and finally a single-chip microcomputer controller of the reconfigurable intelligence surface accessory device executes the configuration change to the reconfigurable intelligence surface. After completing the parameter configuration of the plurality of separate reconfigurable intelligence surfaces, the plurality of separate reconfigurable intelligence surfaces may prepare for data transmission to achieve uplink enhancement, or downlink enhancement, or simultaneous uplink enhancement and downlink enhancement.

The reconfigurable intelligence surface accessory device provided in the embodiment of the present application is used for assisting in uplink enhancement in a default state (i.e., the folded state) to mainly reduce the terminal power consumption. This is because the beamforming effect obtained from the reconfigurable intelligence surface in a strong signal scenario such as a center of the cell is different that in an edge of the cell or other weak signal scenarios. In the center of the cell, a signal strength of the base station is higher, and a high rank channel propagated as a rich scattering path may obtain a higher multiple-input multiple-output (MIMO) multiplexing gain. At this time, acquiring the signal from low-rank reconfigurable intelligence surface channels significantly reduces the MIMO multiplexing gain of the communication terminal. In a case where the edge of the cell or the base station signal is blocked and there is severe interference from a neighboring cell, the signal strength of the base station is low, and a good array gain may be obtained through the reconfigurable intelligence surface assisted communication. Therefore, after being connected to the terminal, the reconfigurable intelligence surface accessory device provided in the embodiment of the present application may perform uplink enhancement in the default state when the terminal is in a strong signal region, and is unfolded into a single-layer tiled state, a single-layer non-tiled state, and a state of semi-surrounding or fully surrounding the terminal body when the terminal is in a weak signal region. Based on the quantity and orientation of the separate reconfigurable intelligence surfaces, at least one operating mode of energy splitting, mode switching, or time switching is selected to prioritize downlink enhancement while also considering uplink enhancement. In addition, due to the large changes in the application environment of the mobile terminal, the mobile terminal often switches back and forth to operate between a strong signal and a weak signal, making the mobile terminal more suitable for this purpose.

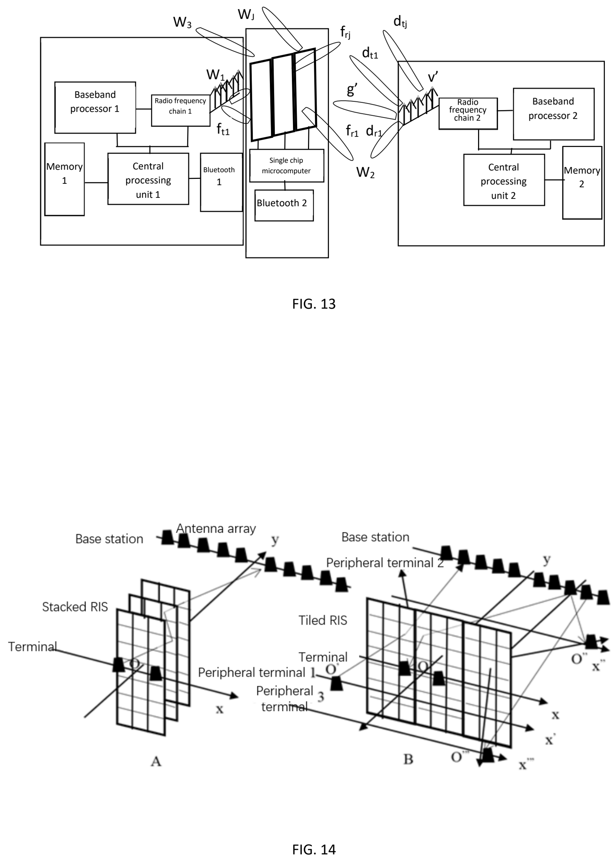

For the convenience of understanding the terminal communication method provided in the embodiment of the present application, reference may be made to the embodiments shown in FIG. 12 and FIG. 13. FIG. 12 is a schematic diagram of a plurality of separate reconfigurable intelligence surfaces configured to perform uplink enhancement in a folded state according to an embodiment of the present application. FIG. 13 is a schematic diagram of a plurality of separate reconfigurable intelligence surfaces configured to perform uplink enhancement and downlink enhancement simultaneously in a single-layer tiled state according to an embodiment of the present application. Illustration is made in the embodiments shown in FIG. 12 and FIG. 13 by taking a reconfigurable intelligence surface accessory device including three separate reconfigurable intelligence surfaces as an example.

The quantity of transmitting antenna units of a terminal is set to K, the quantity of receiving antenna elements of a base station is set to M, and the quantity of the electromagnetic elements of each layer of the STAR-RIS in a stacked state is set to N.

When the plurality of separate reconfigurable intelligence surfaces are configured to perform uplink enhancement in the folded state, as shown in FIG. 12, the base station acquires a signal transmitted by the terminal through multi-layer stacked STAR-RIS full transmission as follows:

$$y = g^H (\prod_{i=1}^{1} k\Theta_i f_i) ws + n \; ;$$

where $s \sim CN(0,1)$, is a complex Gaussian distribution with a mean value of 0, independent statistics of real and imaginary parts, and variance of 1/2 each, $g \in C^{N \times M}$ is a direct channel coefficient between the outermost layer of a STAR-RIS accessory device and the base station, $g^H$ is its transposition conjugate, $k$ is a loss coefficient that penetrates the STAR-RIS, $\Theta_i$ is a transmission phase shift array of any layer $i \in N \equiv \{1,2,...,I\}$ in multiple layers, $\Theta_i = diag(\theta_i) = diag([\theta_{i,1}, \theta_{i,2},..., \theta_{i,N}]^T)$, $f_1 \in C^{N \times K}$ and $f_i \in C^{N \times K}$ are respectively channel coefficients from a terminal radio frequency chain to the innermost layer of the STAR-RIS, and from any layer after the second layer to the next layer until the outermost layer, $n$ is white Gaussian noise (AWGN), and the terminal radio frequency chain transmits a vector $w$ of uplink beamforming, with $w \in C^{K \times 1}$ power limit of $\| w \|_2^2 \leq P_{max}$ (2 norm squared of $w$).

A receiving combination vector of M collecting antennas of the receiving end of the base station is $v \in C^{M \times 1}$, therefore the uplink joint received signal of the base station is:

$$z = v^H y = v^H g^H (\prod_{i=1}^{1} k\Theta_i f_i) ws + v^H n \; ;$$

where

$$v^H n \in CN(0, \| v^H \|_2^2 \sigma^2) .$$

In this way, under a condition of limiting maximum transmitting power and phase shift, the problem of maximizing a signal-noise ratio (SNR) detected by the base station is:

$$\max_{v, \Theta_1,...,\Theta_I, w} SNR = \frac{| v^H g^H (\prod_{i=1}^{1} k\Theta_i f_i) w |^2}{\| v^H \|_2^2 \sigma^2} \; ;$$

$$\text{s.t.} \; \| w \|_2^2 \leq P_{max} , \; | \theta_{i,n} | = 1, \forall i, n .$$

This is a non-convexity problem that requires solving using an alternating optimization method. That is, $v$, $\Theta_1,...,\Theta_I$, $w$ needs to be alternatively optimized. In a case of fixing the STAR-RIS phase shift coefficient matrix $\Theta_1,...,\Theta_I$ and the beamforming vector $w$ of the terminal, the receiving combination vector $v$ of the base station is optimized; then $v$ and $w$ are fixed, and $\Theta_1,...,\Theta_I$ is optimized; and finally $v$ and $\Theta_1,...,\Theta_I$ are fixed, and $w$ is optimized.

Optimization of $v$ uses a singular value decomposition (SVD) method to acquire a suboptimal solution by solving a maximum eigenvector for a positive semi-definite matrix with rank 1 relaxation when necessary.

Optimization of $\Theta_1,...,\Theta_I$ takes an optimal solution that all $\theta_{i,n}$ have complementary phase angles as a product of vectors.

Optimization of *w* is to first normalize it, limit a normalized 2-norm to 1, and then convert it to an optimal solution of the optimized normalized $\prod_{i=1}^{1} k\Theta_i f_i g v'$ through a maximum ratio and merging ratio. A solution object needs to be further transformed into a non-convex second-order constrained second-order programming, and then auxiliary variables are introduced to transform it into a convex semi regular matrix, and rank 1 relaxation is required to acquire a suboptimal solution when necessary.

The plurality of separate reconfigurable intelligence surfaces are configured to perform uplink enhancement and downlink enhancement simultaneously in the unfolded state, as shown in FIG. 13. In FIG. 13, the plurality of separate reconfigurable intelligence surfaces are in a single-layer tiled state and are in an operating mode of energy splitting. That is, the electromagnetic units of the plurality of separate reconfigurable intelligence surfaces operate simultaneously in transmission and reflection. A vector of the downlink beamforming of the base station is *v'*, with $v' \in C^{P \times 1}$ power limit of $\| v' \|_2^2 \leq P_{\max}$ (2 norm squared of *v'*), and only considers a line of sight (LOS) path, ignoring a non line of sight (NLOS) path. The downlink signal from the base station to the terminal includes both a cascaded channel via the STAR-RIS and a direct channel. Therefore, the signal acquired by the terminal may be represented as (ignoring the extremely low downlink single-layer penetration loss *k*):

$$y' = (f_{t1}^H \Theta_{t1}^{ES} g' + d_{t1}^H) v' s' + n ;$$

where $f_{t1}^H$ is a transposition conjugate of a channel coefficient transmitted from the STAR-RIS to the terminal, $\Theta_{t1}^{ES}$ is phase shift and amplitude shift coefficients of an ES mode from the STAR-RIS to the terminal (compared to uplink full transmission, with added amplitude modulation), and $d_{t1}$ is a direct channel coefficient from the base station to the terminal.

A receiving combination vector of *Q* collecting antennas of the terminal is $w_1 \in C^{Q \times 1}$, therefore the downlink joint received signal of the terminal is:

$$z_1' = w_1^H y' = w_1^H (f_{t1}^H \Theta_{t1}^{ES} g' + d_{t1}^H) v' s' + w_1^H n .$$

When performing downlink enhancement, there are also peripheral terminals that acquire the signal through STAR-RIS transmission, $z_2', ..., z_j'$, and the difference between this signal and $z_1'$ is that the peripheral terminal is in a far field and has a higher path loss relative to the STAR-RIS. Processing is performed temporarily under the assumption of consistency. Further, a signal to interference plus noise ratio (SINR) detected by the terminal is:

$$SINR = \frac{|w_1^H (f_{t1}^H \Theta_{t1}^{ES} g' + d_{t1}^H) v'|^2}{\sum_{j \neq 1}^{J} |w_j^H (f_{tj}^H \Theta_{tj}^{ES} g' + d_{tj}^H) v'|^2 + \| w_1^H \|_2^2 \sigma^2}, j = 1, ..., J .$$

In the above formula, the numerator $|w_1^H (f_{t1}^H \Theta_{t1}^{ES} g' + d_{t1}^H) v'|^2$ refers to a downlink signal strength received by the terminal, $\sum_{j \neq 1}^{J} |w_j^H (f_{tj}^H \Theta_{tj}^{ES} g' + d_{tj}^H) v'|^2$ in the denominator refers to the downlink interference signal strength of other peripheral terminals, and $\| w_1^H \|_2^2 \sigma^2$ refers to the downlink noise signal strength.

According to the above formula, the signal to interference plus noise ratio detected by peripheral terminals (taking $w_p$ as an example) is:

$$SINR = \frac{|w_p^H (f_{tp}^H \Theta_{tp}^{ES} g' + d_{tp}^H) v'|^2}{\sum_{j \neq 1}^{J} |w_j^H (f_{tj}^H \Theta_{tj}^{ES} g' + d_{tj}^H) v'|^2 + \| w_p^H \|_2^2 \sigma^2}, p = 1, ..., J; \ j = 1, ..., J$$

In this way, under a condition of limiting maximum transmitting power and phase shift, the problem of maximizing the SINR detected by the terminal is:

$$\max_{v',\Theta_{t1}^{ES},w_1} SINR = \frac{|w_1^H(f_{t1}^H\Theta_{t1}^{ES}g'+d_{t1}^H)\,v'|^2}{\sum_{j\neq1}^{J}|w_j^H(f_{tj}^H\Theta_{tj}^{ES}g'+d_{tj}^H)v'|^2+\|w_1^H\|_2^2\,\sigma^2},j=1,...,J$$ ;

$$\text{s.t.}\ \|w_1\|_2^2\leq P_{\max},\ \beta_m^t,\beta_m^r\in[0,1],\beta_m^t+\beta_m^r=1,m\in N\{1,...,M\},m<3N,$$

$$\theta_m^t,\theta_m^r\in[0,2\pi),|\theta_m^t-\theta_m^r|=\frac{\pi}{2},\frac{3\pi}{2},\forall m,m=1,2,...,M.$$

This is a non-convexity problem that requires solving using an alternating optimization method. That is, $v'$, $\Theta_{t1}^{ES}$, $w_1$ needs to be alternatively optimized. In a case of fixing the STAR-RIS coefficient matrix $\Theta_{t1}^{ES}$ and the beamforming vector $v'$ of the base station, the receiving combination vector $w_1$ of the terminal is optimized; then $v'$ and $w_1$ are fixed, and $\Theta_{t1}^{ES}$ is optimized; and finally $w_1$ and $\Theta_{t1}^{ES}$ are fixed, and $v'$ is optimized.

Optimization of $w_1$ uses an SVD method to acquire a suboptimal solution by solving a maximum eigenvector for a positive semi-definite matrix with rank 1 relaxation when necessary.

Optimization of $\Theta_{t1}^{ES}$ is to solve a continuous solution where $\theta_n$ satisfies the unit module constraint, round the continuous solution to the nearest discrete value, and then transform an original optimization problem into a binary variable optimization problem to acquire the global optimal solution.

Optimization of $v'$ is to first normalize it, limit a regularized 2-norm to 1, and then convert it to an optimal solution of the optimized normalized $(\Theta_{t1}^{ES}g')^H f_{t1}w_1+d_{t1}w_1$ through a maximum ratio and merging ratio. A solution object needs to be further transformed into a non-convex second-order constrained second-order programming, and then auxiliary variables are introduced to transform it into a convex semi regular matrix, and rank 1 relaxation is required to acquire a suboptimal solution when necessary.

Other peripheral terminals are further divided into two types: a peripheral terminal transmitted through the STAR-RIS and a peripheral terminal reflected through the STAR-RIS. As shown in FIG. 13, $W_2$ is the peripheral terminal reflected through the STAR-RIS, and $W_3$ is the peripheral terminal transmitted through the STAR-RIS. It should be noted that $W_i$, $i=1,...,J$, the symbol is capitalized to distinguish between the terminal and its receiving combination vector $w_i$, $i=1,..,J$, At the same time, $w_i$ is the receiving combination vector in the unfolded state of the plurality of separate reconfigurable intelligence surfaces of the accessory device should be marked as $w_i'$ from the perspective of matching other parameters. However, since there is already a subscript $i$, it can be distinguished from the uplink beamforming vector $w$ of the terminal in the folded state. Therefore, a superscript ' is not added for $w_i$ here.

The SINR detected by the terminal and transmitted through the STAR-RIS is:

$$SINR = \frac{|w_l^H(f_{tl}^H\Theta_{tl}^{ES}g'+d_{tl}^H)\,v'|^2}{\sum_{j\neq l}^{J}|w_j^H(f_{tj}^H\Theta_{tj}^{ES}g'+d_{tj}^H)v'|^2+\|w_l^H\|_2^2\,\sigma^2},l=1,...,J.$$

The SINR detected by the terminal and reflected through the STAR-RIS is:

$$SINR = \frac{|w_i^H(f_{ri}^H\Theta_{ri}^{ES}g'+d_{ri}^H)\,v'|^2}{\sum_{j\neq i}^{J}|w_j^H(f_{rj}^H\Theta_{rj}^{ES}g'+d_{rj}^H)v'|^2+\|w_i^H\|_2^2\,\sigma^2},i=1,...,J.$$

In addition, in the unfolded state of the plurality of separate reconfigurable intelligence surfaces, the terminal also has an application state that is uplink through the STAR-RIS. Taking STAR-RIS transmission as an example, the SINR detected by the base station at this time is:

$$SINR = \frac{|\tilde{v}^H \tilde{g}^H (\tilde{\Theta}_{t1}^{ES} \tilde{f}_{t1} + \tilde{d}_{t1}^H) \tilde{w}_1|^2}{\sum_{j \neq 1}^{J} |\tilde{v}^H \tilde{g}^H (\tilde{\Theta}_{tj}^{ES} \tilde{f}_{tj} + \tilde{d}_{tj}^H) \tilde{w}_j|^2 + \|\tilde{v}^H\|_2^2 \sigma^2}, \quad j = 1, ..., J$$

.

Where $\tilde{v}$ is the receiving combination vector of the base station in response to uplink applications, $\tilde{g}$ is the direct channel coefficient between the outermost layer of the accessory device and the base station at this time, $\tilde{\Theta}_{t1}^{ES}$ is phase shift and amplitude shift coefficients of the ES mode from the terminal to the STAR-RIS at this time, $\tilde{f}_{t1}$ is the channel coefficient transmitted from the terminal to the base station through the STAR-RIS at this time, $\tilde{d}_{t1}$ is the direct channel coefficient from the terminal to the base station at this time, and $\tilde{w}_x$ is the uplink beamforming vector of the terminal or other peripheral terminal. At this time, $|\tilde{v}^H \tilde{g}^H (\tilde{\Theta}_{t1}^{ES} \tilde{f}_{t1} + \tilde{d}_{t1}^H) \tilde{w}_1|^2$ refers to the uplink signal strength received by the base station from the terminal, $\sum_{j \neq 1}^{J} |\tilde{v}^H \tilde{g}^H (\tilde{\Theta}_{tj}^{ES} \tilde{f}_{tj} + \tilde{d}_{tj}^H) \tilde{w}_j|^2$ refers to the uplink interference signal strength from the peripheral terminal, and $\|\tilde{v}^H\|_2^2 \sigma^2$ refers to the uplink noise signal strength.

For the peripheral terminal, the SINR detected by the base station at this time is:

$$SINR = \frac{|\tilde{v}^H \tilde{g}^H (\tilde{\Theta}_{tx}^{ES} \tilde{f}_{tx} + \tilde{d}_{tx}^H) \tilde{w}_x|^2}{\sum_{j \neq x}^{J} |\tilde{v}^H \tilde{g}^H (\tilde{\Theta}_{tj}^{ES} \tilde{f}_{tj} + \tilde{d}_{tj}^H) \tilde{w}_j|^2 + \|\tilde{v}^H\|_2^2 \sigma^2}, \quad x = 1, ..., J; j = 1, ..., J$$

Where $|\tilde{v}^H \tilde{g}^H (\tilde{\Theta}_{tx}^{ES} \tilde{f}_{tx} + \tilde{d}_{tx}^H) \tilde{w}_x|^2$ refers to the uplink signal strength received by the base station from a certain peripheral terminal, $\sum_{j \neq 1}^{J} |\tilde{v}^H \tilde{g}^H (\tilde{\Theta}_{tj}^{ES} \tilde{f}_{tj} + \tilde{d}_{tj}^H) \tilde{w}_j|^2$ refers to the uplink interference signal strength of other peripheral terminals, and $\|\tilde{v}^H\|_2^2 \sigma^2$ refers to the uplink noise signal strength.

For the operating mode where the plurality of separate reconfigurable intelligence surfaces are all configured as mode switching or time switching, $\Theta_{t\delta}^{ES}$, $\Theta_{r\delta}^{ES}$, $\tilde{\Theta}_{t\delta}^{ES}$ and $\tilde{\Theta}_{r\delta}^{ES}$ in the above formula may be replaced with $\Theta_{t\delta}^{MS}$, $\Theta_{r\delta}^{MS}$, $\Theta_{t\delta}^{TS}$, $\Theta_{r\delta}^{TS}$, $\tilde{\Theta}_{t\delta}^{MS}$, $\tilde{\Theta}_{r\delta}^{MS}$, $\tilde{\Theta}_{t\delta}^{TS}$ and $\tilde{\Theta}_{r\delta}^{TS}$ respectively, **where** $\delta = 1$, *i, j,l,x.*

The non-convex optimization mentioned above may be performed using a terminal optimization method or through an AI and/or ML method. The objective of optimization is to achieve STAR-RIS beamforming with minimal sending power while ensuring that the signal to interference plus noise ratio of each end user meets the standard.

It should be noted that when the plurality of separate reconfigurable intelligence surfaces switch from simultaneous uplink and downlink enhancement in the unfolded state to uplink enhancement in the folded state, the specific process is similar to the above process of switching from uplink enhancement in the folded state to simultaneous uplink and downlink enhancement in the unfolded state, and will not be described in detail here.

The difference between the reconfigurable intelligence surface accessory device provided in the embodiment of the present application and a reconfigurable intelligence surface in a relay state is that when used for uplink enhancement, it is a near field model because the terminal is very close to the reconfigurable intelligence surface accessory device. When the reconfigurable intelligence surface accessory device is used for uplink enhancement in the folded state, due to the shielding effect of a shielding outer cover, the signal is not introduced by external interference. When performing phase shift, amplitude modulation may be performed due to near-field characteristics to achieve power enhancement, even up to 50% enhancement. After the reconfigurable intelligence surface accessory device is unfolded, application forms are complex and diverse. FIG. 13 only illustrates by taking the single-layer tiled state used for simultaneous uplink and downlink enhancement as an example. Other application forms may be analogized. At the same time, the process of switching the reconfigurable intelligence surface accessory device from the unfolded state to the folded state may also be analogized and will not be repeated.

When the reconfigurable intelligence surface accessory device assists the terminal in performing uplink enhancement, the plurality of separate reconfigurable intelligence surfaces all operate in transmission, corresponding to the transmission function. When the reconfigurable intelligence surface accessory device assists the terminal in performing downlink enhancement, the plurality of separate reconfigurable intelligence surfaces may simultaneously operate in transmission and reflection, corresponding to the transmission function and the reflection function, as shown in FIG. 14. In addition, the reconfigurable intelligence surface accessory device may appear in different orientations and forms after unfolding, providing a wider range of application scenarios. For example, the plurality of separate reconfigurable intelligence surfaces in the single-layer tiled state may have difference in orientation and angle, and can form a dual reconfigurable intelligence surface to effectively enhance the perception capability. For another example, the plurality of separate reconfigurable intelligence surfaces may provide multi-directional energy transfer accompanied by communication to the terminal and the peripheral terminal in the case of semi-surrounding or fully surrounding the terminal, enabling the a reconfigurable intelligence surface service to expand in all directions, effectively enhancing rich paths, and greatly improving the application capability under the NLOS path.

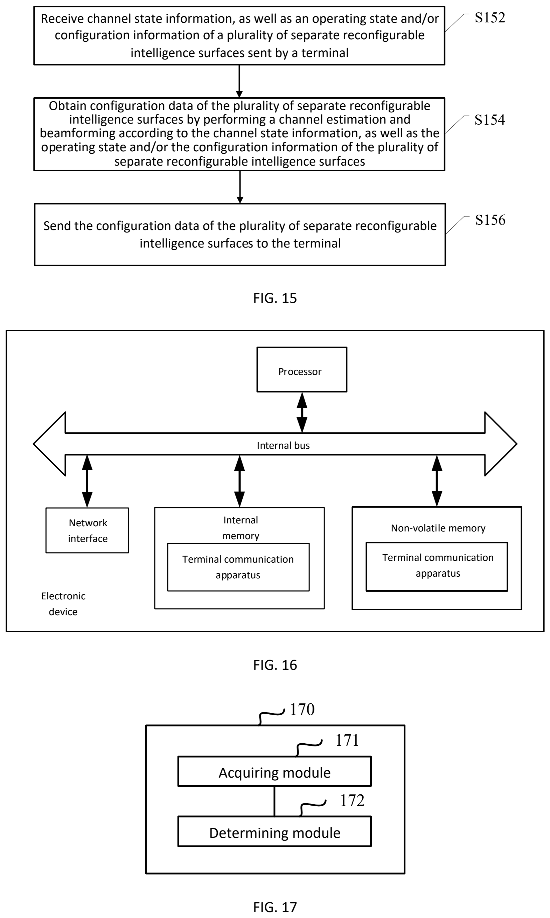

FIG. 15 is a schematic flowchart of a terminal communication method according to an embodiment of the present application. The embodiment shown in FIG. 15 may be applied to a base station, and the communication method shown in FIG. 15 includes the following steps.

At S152, channel state information, as well as an operating state and/or configuration information of a plurality of separate reconfigurable intelligence surfaces sent by a terminal is received.

The terminal here may be a terminal fixedly connected or detachably connected to the reconfigurable intelligence surface accessory device provided by the embodiment of the present application. When performing communicating, the terminal may determine an operating state of the plurality of separate reconfigurable intelligence surfaces in the reconfigurable intelligence surface according to its own communication quality parameter, and further determine the configuration information of the plurality of separate reconfigurable intelligence surfaces after determining the operating state. Then, the channel state information may be measured, and the channel state information, as well as the operating state and/or the configuration information of the plurality of separate reconfigurable intelligence surfaces are sent to the base station. At this time, the base station may receive the channel state information, as well as the operating state and/or the configuration information of the plurality of separate reconfigurable intelligence surfaces from the terminal.

The operating state of the plurality of separate reconfigurable intelligence surfaces is a folded state or an unfolded state. In a case where the operating state is the folded state, the configuration information of the plurality of separate reconfigurable intelligence surfaces include that the plurality of separate reconfigurable intelligence surfaces correspond to a transmission function, and in a case where the operating state is the unfolded state, the configuration information of the plurality of separate reconfigurable intelligence surfaces include at least one of an operating mode of the plurality of separate reconfigurable intelligence surfaces, separate reconfigurable intelligence surfaces corresponding to different operating modes, an unfolding method, an unfolding angle, or a coverage direction. The specific implementation for determining the operating state and the configuration information of the plurality of separate reconfigurable intelligence surfaces by the terminal may refer to the corresponding steps in the embodiment shown in FIG. 11, which will not be illustrated in detail here.

At S154, configuration data of the plurality of separate reconfigurable intelligence surfaces is obtained by performing channel estimation and beamforming according to the channel state information, as well as the operating state and/or the configuration information of the plurality of separate reconfigurable intelligence surfaces.

The specific implementation for performing channel estimation and beamforming by the base station may refer to the corresponding contents in the embodiment shown in FIG. 11 to FIG. 13, which will not be illustrated in detail here.

At S156: the configuration data of the plurality of separate reconfigurable intelligence surfaces is sent to the terminal.

After receiving the configuration data, the terminal may perform parameter configuration on the plurality of separate reconfigurable intelligence surfaces according to the configuration data. After completing parameter configuration, the terminal may perform uplink or downlink data transmission through the plurality of separate reconfigurable intelligence surfaces.

According to the technical solutions provided in the embodiment of the present application, the reconfigurable intelligence surface accessory device is fixedly or detachably connected to the terminal. The accessory device includes the plurality of separate reconfigurable intelligence surfaces which are connected. The plurality of separate reconfigurable intelligence surfaces have the folded state and the unfolded state. In the folded state, the accessory device may be configured to assist the terminal in performing uplink communication, and in the unfolded state, the accessory device may be configured to assist at least one of the terminal or its peripheral terminal in performing uplink communication and/or downlink communication. Therefore, when the terminal has the communication need, the terminal may be assisted in performing uplink enhancement by folding the plurality of separate reconfigurable intelligence surfaces, and at least one of the terminal or its peripheral terminal may be assisted in performing uplink communication and/or downlink enhancement by unfolding the plurality of separate reconfigurable intelligence surfaces. Thus, the communication environment and state of the terminal and/or the peripheral terminal can be improved, and the communication needs of the terminal and/or the peripheral terminal are met. In addition, as the plurality of separate reconfigurable intelligence surfaces may assist terminal in performing uplink communication in the folded state, the radio frequency chain transmitting power of the terminal can be effectively reduced, and the power consumption of the terminal is saved. As the plurality of separate reconfigurable intelligence surfaces may assist at least one of the terminal and/or the peripheral terminal in performing uplink enhancement and/or downlink enhancement in the unfolded state, the transmission needs of the terminal for their own and the peripheral terminal in uplink and/or downlink, thus achieving flexible applications in the complex and ever-changing wireless communication scenarios.

The specific embodiments of the present application are described above. Other embodiments are within the scope of the appended claims. In some cases, the actions or steps recorded in the claims may be executed in a sequence different from that of the embodiment and may still achieve expected results. In addition, the process depicted in the accompanying drawings does not necessarily require a particular order or sequential order shown to achieve the expected results. In some implementation, multitasking and parallel processing may be possible or may be advantageous.

FIG. 16 is a schematic structural diagram of an electronic device according to an embodiment of the present application. Referring to FIG. 16, at a hardware level, the electronic device includes a processor, optionally further includes an internal bus, a network interface, and a memory. The memory may include an internal memory such as a high-speed random-access memory (RAM), or a non-volatile memory such as at least one disk memory. Certainly, the electronic device may also include hardware required for other services.

The processor, the network interface, and the memory may be interconnected by the internal bus, and the internal bus may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is shown in FIG. 16, but it does not indicate only one bus or one type of bus.

The memory is configured to store a program. In some cases, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form a terminal communication apparatus at a logical level. The processor executes the program stored in the memory and is specifically configured to perform the following operations: acquiring a communication quality parameter of a terminal; and determining an operating state of a plurality of separate reconfigurable intelligence surfaces according to the communication quality parameter of the terminal, wherein the operating state is a folded state or an unfolded state.

The above method performed by the terminal communication apparatus disclosed in the embodiment shown in FIG. 16 of the present application may be applied to the processor or implemented by the processor. The processor may be an integrated circuit chip having a signal processing capability. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The electronic device may further perform the method shown in FIG. 11 and implement the functions of the terminal communication apparatus in the embodiment shown in FIG. 11, which is not repeated here in the embodiments of the present application.

Certainly, in addition to the software implementations, the electronic device of the present application does not exclude other implementations, such as logic devices or combinations of software and hardware, that is, an execution body of the following process flows is not limited to each logic unit, but may be hardware or logic devices.

An embodiment of the present application further provides a computer-readable storage medium. The computer-readable storage medium stores one or more programs. The one or more programs include instructions, and the instructions, when executed by a portable electronic device including a plurality of application programs, cause the portable electronic device to perform the method in the embodiment shown in FIG. 11 and be specifically configured to perform the following operations: acquiring a communication quality parameter of a terminal; and determining an operating state of a plurality of separate reconfigurable intelligence surfaces according to the communication quality parameter of the terminal, wherein the operating state is a folded state or an unfolded state.

FIG. 17 is a schematic structural diagram of a terminal communication apparatus 170 according to an embodiment of the present application. Please refer to FIG. 17, in a software implementation, the terminal communication apparatus 170 may include an acquiring module 171 and a determining module 172, wherein: the acquiring module 171 acquires a communication quality parameter of a terminal; and the determining module 172 determines an operating state of a plurality of separate reconfigurable intelligence surfaces according to the communication quality parameter of the terminal, wherein the operating state is a folded state or an unfolded state.

Optionally, determining, by the determining module 172, the operating state of the plurality of separate reconfigurable intelligence surfaces according to the communication quality parameter of the terminal includes: determining that the operating state is the folded state in a case where the communication quality parameter of the terminal is greater than or equal to a preset quality parameter value; or determining that the operating state is the unfolded state in a case where the communication quality parameter of the terminal is less than the preset quality parameter value.

Optionally, the apparatus 170 further includes a processing module 173. In a case that the determining module 172 determines the operating state of the plurality of separate reconfigurable intelligence surfaces, the apparatus further includes at least one of the following: the processing module 173 reduces radio frequency chain transmitting power of the terminal in a case where the operating state is the folded state; and maintains or increases the radio frequency chain transmitting power of the terminal according to a dynamic value of the communication quality parameter of the terminal in a case where the operating state is the unfolded state; or the determining module 172 determines configuration information for the plurality of separate reconfigurable intelligence surfaces according to the operating state, wherein in the case where the operating state is the folded state, the configuration information includes that the plurality of separate reconfigurable intelligence surfaces correspond to a transmission function, and in the case where the operating state is the unfolded state, the configuration information includes at least one of an operating mode of the plurality of separate reconfigurable intelligence surfaces, separate reconfigurable intelligence surfaces corresponding to different operating modes, an unfolding method, an unfolding angle, or a coverage direction; and the determining module adjusts, in the case where the operating state is the unfolded state, the configuration information of the plurality of separate reconfigurable intelligence surfaces according to the communication quality parameter and a power consumption state of the terminal if an uplink enhancement request and/or a downlink enhancement request are/is received, wherein the uplink enhancement request includes an uplink enhancement request from a base station and/or a peripheral terminal, and the downlink enhancement request includes a downlink enhancement request from the base station and/or the peripheral terminal.

Optionally, the apparatus 170 further includes a sending module 174.

The sending module 174 sends notification information to the accessory device, wherein the notification information includes the operating state and/or the configuration information of the plurality of separate reconfigurable intelligence surfaces, and the notification information is used for the accessory device to adjust the operating state and/or configuration of the plurality of separate reconfigurable intelligence surfaces.

Optionally, the apparatus 170 further includes a receiving module 175.

The sending module 174 sends channel state information, the operating state, and/or the configuration information to the base station; the receiving module 175 receives configuration data of the plurality of separate reconfigurable intelligence surfaces from the base station, wherein the configuration data is obtained by the base station after performing a channel estimation and beamforming according to the channel state information, the operating state, and/or the configuration information; and the processing module 173 performs parameter configuration on the plurality of separate reconfigurable intelligence surfaces according to the configuration data; wherein in a case where the operating state is the unfolded state and the accessory device is configured to assist the terminal and/or the peripheral terminal in performing downlink communication, the configuration data is determined according to a signal to interference plus noise ratio of a signal received by the terminal; and the signal to interference plus noise ratio is determined according to a downlink signal, a downlink interference signal, and a downlink noise signal received by the terminal, the downlink signal is determined according to a downlink communication parameter of the terminal, the downlink interference signal is determined according to a downlink communication parameter of the peripheral terminal, and the downlink noise signal is in complex Gaussian distribution; and wherein in a case where the operating state is the unfolded state and the accessory device is configured to assist the terminal and/or the peripheral terminal in performing uplink communication, the configuration data is determined according to a signal to interference plus noise ratio of a signal received by the base station; and the signal to interference plus noise ratio is determined according to an uplink signal, an uplink interference signal, and an uplink noise signal of the terminal received by the base station, the uplink signal is determined according to an uplink communication parameter of the terminal, the uplink interference signal is determined according to an uplink communication parameter of the peripheral terminal, and the uplink noise signal is in complex Gaussian distribution.

The terminal communication apparatus 170 provided in the embodiment of the present application may further perform the method shown in FIG. 11 and implement the functions of the terminal communication apparatus 170 in the embodiment shown in FIG. 11, which is not repeated here in the embodiment of the present application.

An embodiment of the present application further provides a terminal, and the terminal may be fixedly connected or detachably connected to the reconfigurable intelligence surface accessory device provided in the embodiment of the present application. In a case where the terminal is connected to the reconfigurable intelligence surface accessory device, the terminal may further perform communication through the terminal communication method provided in the embodiment of the present application, thereby effectively improving the communication environment and state of the terminal under the complex and ever-changing wireless communication scenarios, and meeting the communication needs of the terminal. In some cases, reference may be made to the embodiments shown in FIG. 1 to FIG. 14 above, which will not be illustrated in detail here. Optionally, the terminal may be a mobile terminal or a fixed terminal, specifically including but not limited to a CPE, a vehicle-mounted terminal, a mobile phone, a tablet computer, a smart home, etc.

In total, the above is merely preferred embodiments of the present application and is not intended to limit the scope of protection of the present application. Any modification, equivalent replacement, improvement and the like made within the spirit and principle of the present application shall all be contained in the scope of protection of the present application.

The system, apparatus, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. Information can be computer-readable instructions, data structures, modules of programs, or other data. Examples of the computer storage medium include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, which may be configured to store information that can be accessed by a computing apparatus. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further limitations, the elements limited by a statement "including one..." do not exclude the existence of other identical elements in the process, method, commodity or device that includes the said elements.

The various embodiments in the present application are described in a progressive manner, and the same or similar parts between the various embodiments can be referred to each other. Each embodiment focuses on contents different from other embodiments. In particular, as for the system embodiments, as they are basically similar to the method embodiments, the description is relatively simple. As for related parts, please refer to part of the description in the method embodiments.

**Claims**

1.  A reconfigurable intelligence surface accessory device, wherein the accessory device is fixedly connected to a terminal or is detachably connected to the terminal, the accessory device comprises a plurality of separate reconfigurable intelligence surfaces, and the plurality of separate reconfigurable intelligence surfaces are connected, wherein

    the plurality of separate reconfigurable intelligence surfaces comprise a folded state and an unfolded state;
    in the folded state, the accessory device is configured to assist the terminal in performing uplink communication; and
    in the unfolded state, the accessory device is configured to assist at least one of the terminal or a peripheral terminal of the terminal in performing uplink communication and/or downlink communication.

2.  The accessory device according to claim 1, further comprising a shielding outer cover, wherein the shielding outer cover comprises a wave-absorbing material, the shielding outer cover is equipped with a support rod and a first rotating shaft, the first rotating shaft is driven by a first motor, and the first rotating shaft rotates so as to control the support rod to drive the shielding outer cover to be opened or closed;

    wherein, in the folded state, the shielding outer cover is in a closed state, the plurality of separate reconfigurable intelligence surfaces are located inside the shielding outer cover, and the shielding outer cover is configured to shield external interference; and

in the unfolded state, the shielding outer cover is in an open state, and the plurality of separate reconfigurable intelligence surfaces extend outward from an interior of the shielding outer cover.

3. The accessory device according to claim 1 or 2, wherein the accessory device is connected to the terminal through a support pan-tilt, and the support pan-tilt is fixedly connected to the terminal or is detachably connected to the terminal; and

the support pan-tilt is equipped with a second rotating shaft, the second rotating shaft is driven by a second motor, the second rotating shaft rotates to drive the support pan-tilt to rotate, and the support pan-tilt rotates to drive the plurality of separate reconfigurable intelligence surfaces to be unfolded or folded.

4. The accessory device according to claim 3, wherein the plurality of separate reconfigurable intelligence surfaces are connected by a torsional spring hinge, and the torsional spring hinge is configured to assist the support pan-tilt in unfolding or folding the plurality of separate reconfigurable intelligence surfaces;

wherein a third motor is arranged at the torsional spring hinge, and in the unfolded state, the third motor is configured to drive the torsional spring hinge to adjust an included angle between the plurality of separate reconfigurable intelligence surfaces.

5. The accessory device according to claim 1, comprising a control circuit board, wherein the control circuit board is internally provided with at least one of a controller, a memory, a communication module, a battery, or a power management module;

wherein the controller is configured to control communication between electromagnetic units of the plurality of separate reconfigurable intelligent surfaces and control power supply of a motor;
the memory is configured to store a control program of the controller;
the communication module is used for near field communication between the controller and the terminal; and
the power management module is configured to control charging and discharging of the battery by means of the controller, the power management module is connected to the terminal, and a connection method comprises electrical connection.

6. The accessory device according to any one of claims 1, 2, and 4, wherein

the folded state is a default state of the plurality of separate reconfigurable intelligence surfaces;
the unfolded state comprises at least one unfolding method, and the at least one unfolding method comprises at least one of single-layer tiling, single-layer non-tiling, semi-surrounding the terminal, or fully surrounding the terminal;
in a case where a separate reconfigurable intelligence surface corresponds to a front of a screen of the terminal, the separate reconfigurable intelligence surface is in a transparent state; and
the plurality of separate reconfigurable intelligence surfaces comprise a stretchable separate reconfigurable intelligence surface, and in a state of semi-surrounding the terminal or a state of fully surrounding the terminal, the plurality of separate reconfigurable intelligence surfaces are controlled to be attached to an outer surface of the terminal by means of the stretchable separate reconfigurable intelligence surface.

7. The accessory device according to claim 1, wherein the plurality of separate reconfigurable intelligence surfaces have a transmission function and a reflection function;

wherein in the folded state, the plurality of separate reconfigurable intelligence surfaces correspond to the transmission function and are configured to assist the terminal in performing uplink communication; and
in the unfolded state, the plurality of separate reconfigurable intelligence surfaces have at least one operating mode and are configured to assist at least one of the terminal or the peripheral terminal in performing uplink communication and/or downlink communication; the at least one operating mode comprises at least one of energy splitting, mode switching, or time switching; the energy splitting represents that all electromagnetic units in the separate reconfigurable intelligence surfaces correspond to the transmission function and the reflection function simultaneously, the mode switching represents that some electromagnetic units in the separate reconfigurable intelligence surfaces correspond to the transmission function, and other electromagnetic units therein correspond to the reflection function, and the time switching represents that all the electromagnetic units in the separate reconfigurable intelligence surfaces correspond to the transmission function and the reflection function in a time-division manner.

8. A terminal communication method, performed by a terminal, wherein the terminal is fixedly connected or detachably connected to the reconfigurable intelligence surface accessory device according to any one of claims 1 to 7, and the method comprises:

acquiring a communication quality parameter of the terminal; and

determining, according to the communication quality parameter of the terminal, an operating state of a plurality of separate reconfigurable intelligence surfaces, wherein the operating state is a folded state or an unfolded state.

9. The method according to claim 8, wherein determining, according to the communication quality parameter of the terminal, the operating state of the plurality of separate reconfigurable intelligence surfaces comprises:

determining, in a case where the communication quality parameter of the terminal is greater than or equal to a preset quality parameter value, that the operating state is the folded state; or

determining, in a case where the communication quality parameter of the terminal is less than the preset quality parameter value, that the operating state is the unfolded state.

10. The method according to claim 8 or 9, wherein in a case of determining the operating state of the plurality of separate reconfigurable intelligence surfaces, the method further comprises at least one of the following:

reducing radio frequency chain transmitting power of the terminal in a case where the operating state is the folded state;

maintaining or increasing the radio frequency chain transmitting power of the terminal according to a dynamic value of the communication quality parameter of the terminal in a case where the operating state is the unfolded state;

determining configuration information for the plurality of separate reconfigurable intelligence surfaces according to the operating state, wherein in the case where the operating state is the folded state, the configuration information comprises that the plurality of separate reconfigurable intelligence surfaces correspond to a transmission function, and in the case where the operating state is the unfolded state, the configuration information comprises at least one of an operating mode of the plurality of separate reconfigurable intelligence surfaces, separate reconfigurable intelligence surfaces corresponding to different operating modes, an unfolding method, an unfolding angle, or a coverage direction; or

adjusting, in the case where the operating state is the unfolded state, the configuration information of the plurality of separate reconfigurable intelligence surfaces according to the communication quality parameter and a power consumption state of the terminal if an uplink enhancement request and/or a downlink enhancement request are/is received, wherein the uplink enhancement request comprises an uplink enhancement request from a base station and/or a peripheral terminal, and the downlink enhancement request comprises a downlink enhancement request from the base station and/or the peripheral terminal.

11. The method according to claim 10, further comprising:

sending notification information to the accessory device, wherein the notification information comprises the operating state and/or the configuration information of the plurality of separate reconfigurable intelligence surfaces, and the notification information is used for the accessory device to adjust the operating state and/or configuration of the plurality of separate reconfigurable intelligence surfaces.

12. The method according to claim 10, further comprising:

sending channel state information, and the operating state and/or the configuration information to the base station;

receiving configuration data of the plurality of separate reconfigurable intelligence surfaces from the base station, wherein the configuration data is obtained by the base station after performing a channel estimation and beamforming according to the channel state information, the operating state, and/or the configuration information; and

performing parameter configuration on the plurality of separate reconfigurable intelligence surfaces according to the configuration data;

wherein in a case where the operating state is the unfolded state and the accessory device is configured to assist the terminal and/or the peripheral terminal in performing downlink communication, the configuration data is determined according to a signal to interference plus noise ratio of a signal received by the terminal; and the signal to interference plus noise ratio is determined according to a downlink signal, a downlink interference signal, and a downlink noise signal received by the terminal, the downlink signal is determined according to a downlink communication parameter of the terminal, the downlink interference signal is determined according to a downlink communication parameter of the peripheral terminal, and the downlink noise signal is in complex Gaussian distribution; and

in a case where the operating state is the unfolded state and the accessory device is configured to assist the terminal and/or the peripheral terminal in performing uplink communication, the configuration data is determined according to a signal to interference plus noise ratio of a signal received by the base station; and the signal to interference plus noise ratio is determined according to an uplink signal, an uplink interference signal, and an uplink noise signal of the terminal received by the base station, the uplink signal is determined according to an uplink communication parameter of the terminal, the uplink interference signal is determined according to an uplink communication parameter of the peripheral terminal, and the uplink noise signal is in complex Gaussian distribution.

13. An electronic device, comprising:

a processor; and
a memory, configured to store processor-executable instructions;
wherein the processor is configured to execute the instructions, so as to implement the method according to any one of claims 8 to 12.

14. A computer-readable storage medium, wherein instructions in the storage medium, when executed by a processor of an electronic device, cause the electronic device to be able to perform the method according to any one of claims 8 to 12.

15. A terminal, fixedly connected or detachably connected to the reconfigurable intelligence surface accessory device according to any one of claims 1 to 7.

Reconfigurable intelligence surface
accessory device 10

A plurality of separate reconfigurable
intelligence surfaces 101
(Including a folded state and an
unfolded state)

Terminal 11

FIG. 1

FIG. 2

FIG. 3

FIG. 4

FIG. 5

FIG. 6

FIG. 7

FIG. 8

FIG. 9

FIG. 10

| |
|---|
| Acquire a communication quality parameter of a terminal |

S112

| |
|---|
| Determine an operating state of a plurality of separate reconfigurable intelligence surfaces according to the communication quality parameter of the terminal, wherein the operating state is a folded state or an unfolded state |

S114

FIG. 11

FIG. 12

FIG. 13

FIG. 14

Receive channel state information, as well as an operating state and/or configuration information of a plurality of separate reconfigurable intelligence surfaces sent by a terminal — S152

Obtain configuration data of the plurality of separate reconfigurable intelligence surfaces by performing a channel estimation and beamforming according to the channel state information, as well as the operating state and/or the configuration information of the plurality of separate reconfigurable intelligence surfaces — S154

Send the configuration data of the plurality of separate reconfigurable intelligence surfaces to the terminal — S156

FIG. 15

Processor

Internal bus

Network interface

Internal memory

Terminal communication apparatus

Non-volatile memory

Terminal communication apparatus

Electronic device

FIG. 16

170

171

Acquiring module

172

Determining module

FIG. 17

## INTERNATIONAL SEARCH REPORT

| International application No. |
| --- |
| **PCT/CN2024/080024** |

### A. CLASSIFICATION OF SUBJECT MATTER

H04B 7/145(2006.01)i

According to International Patent Classification (IPC) or to both national classification and IPC

### B. FIELDS SEARCHED

Minimum documentation searched (classification system followed by classification symbols)

IPC: H04B, H04W,H04Q,H01Q

Documentation searched other than minimum documentation to the extent that such documents are included in the fields searched

Electronic data base consulted during the international search (name of data base and, where practicable, search terms used)

3GPP, CNABS, CNTXT, ENTXTC, WPABSC, ENTXT, OETXT, CNKI, IEEE: 单个, 单体, 辅助, 连接, 收拢, 闭合, 收合, 闭合, 开合, 通信, 相连, 一体, 用户设备, 展开, 打开, 折叠, 张开, 收起, 开合, 展平, 智能超表面, 终端, single, MT, RIS, UE, detach+, RIS-UE, connect+, integration, open, close

### C. DOCUMENTS CONSIDERED TO BE RELEVANT

| Category* | Citation of document, with indication, where appropriate, of the relevant passages | Relevant to claim No. |
| --- | --- | --- |
| A | WO 2022249820 A1 (KYOCERA CORPORATION) 01 December 2022 (2022-12-01) description, paragraphs [0038]-[0048], and figures 7 and 8 | 1-15 |
| A | CN 114040478 A (TSINGHUA UNIVERSITY) 11 February 2022 (2022-02-11) entire document | 1-15 |
| A | CN 114843744 A (DATANG MOBILE COMMUNICATIONS EQUIPMENT CO., LTD.) 02 August 2022 (2022-08-02) entire document | 1-15 |
| A | WO 2022193048 A1 (QUALCOMM INC.) 22 September 2022 (2022-09-22) entire document | 1-15 |
| A | NTT DOCOMO, INC. "Views on RIS for Rel-19" *3GPP TSG RAN Rel-19 workshop, RWS-230261,* 16 June 2023 (2023-06-16), entire document | 1-15 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 May 2024** | **22 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/080024** |

| C. | DOCUMENTS CONSIDERED TO BE RELEVANT | |
| --- | --- | --- |
| Category* | Citation of document, with indication, where appropriate, of the relevant passages | Relevant to claim No. |
| A | AHMED, Shakil et al. "Blockage Prediction for Mobile UE in RIS-assisted Wireless Networks: A Deep Learning Approach" *MILCOM 2022 - First Annual Young Scholar Workshop*, 31 December 2022 (2022-12-31), entire document | 1-15 |

Form PCT/ISA/210 (second sheet) (July 2022)

**INTERNATIONAL SEARCH REPORT**
Information on patent family members

International application No.

**PCT/CN2024/080024**

| Patent document cited in search report | | | Publication date (day/month/year) | Patent family member(s) | | | Publication date (day/month/year) |
|---|---|---|---|---|---|---|---|
| WO | 2022249820 | A1 | 01 December 2022 | US | 2024089744 | A1 | 14 March 2024 |
| | | | | EP | 4329211 | A1 | 28 February 2024 |
| | | | | JPWO | 2022249820 | A1 | 01 December 2022 |
| | | | | CN | 117397179 | A | 12 January 2024 |
| CN | 114040478 | A | 11 February 2022 | WO | 2023071264 | A1 | 04 May 2023 |
| CN | 114843744 | A | 02 August 2022 | | None | | |
| WO | 2022193048 | A1 | 22 September 2022 | EP | 4309397 | A1 | 24 January 2024 |
| | | | | KR | 20230155450 | A | 10 November 2023 |
| | | | | US | 2024106499 | A1 | 28 March 2024 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310777620